(19) Europäisches Patentamt
European Patent Office
Office européen des brevets

(11) **EP 3 023 808 A1**

(12) **EUROPEAN PATENT APPLICATION**
published in accordance with Art. 153(4) EPC

(43) Date of publication:
**25.05.2016 Bulletin 2016/21**

(21) Application number: **14826324.7**

(22) Date of filing: **16.07.2014**

(51) Int Cl.:
**G01S 7/41** (2006.01)   **G06T 7/00** (2006.01)

(86) International application number:
**PCT/JP2014/068932**

(87) International publication number:
**WO 2015/008798 (22.01.2015 Gazette 2015/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.07.2013   JP 2013149521**

(71) Applicant: **Mitsubishi Electric Corporation
Chiyoda-ku
Tokyo 100-8310 (JP)**

(72) Inventors:
• **KAWAKAMI, Kaori
  Tokyo 100-8310 (JP)**
• **SUWA, Kei
  Tokyo 100-8310 (JP)**
• **HOSHINO, Takehiro
  Tokyo 100-8310 (JP)**
• **HARA, Teruyuki
  Tokyo 100-8310 (JP)**

(74) Representative: **Pfenning, Meinig & Partner mbB
Patent- und Rechtsanwälte
Theresienhöhe 11a
80339 München (DE)**

(54) **TARGET TYPE IDENTIFICATION DEVICE**

(57)   A polygon pattern generating unit 6 to extract a plurality of luminance points from a dictionary image of each group to generate a dictionary polygon pattern whose vertices are the plurality of luminance points, and extract a plurality of luminance points from an observation image to generate a target polygon pattern whose vertices are the plurality of luminance points, and a pattern comparing unit 10 to perform a comparison of the dictionary polygon pattern of each group and the target polygon pattern are disposed, and a type determining unit 15 determines the type of an unknown target by using the result of the comparison of the patterns which is performed by the pattern comparing unit 10.

FIG.1

## Description

FIELD OF THE INVENTION

The present invention relates to a target type identification device that determines the type of a target.

BACKGROUND OF THE INVENTION

A conventional target type identification device generates feature quantity dictionaries from reference images of known targets of known types (e.g., airplanes of known models, etc.) in advance, and compares an observation image of a still target (an unknown target which is a target for type determination), which is acquired through radar observation, and a plurality of feature quantity dictionaries, thereby determining the type of the still target.

Each reference image is typically either an actual image which was observed in advance (an image having some unknown specifications) or a simulation image which was generated through simulation using a computer (an image having known specifications).

Further, the following nonpatent reference 1 discloses a target type identification device that extracts a feature quantity showing the shape of a target from a radar observation image (for example, extracts a standard deviation of a luminance distribution, a fractal dimension, or the like as a textural feature) and classifies the target by comparing the feature quantity and feature quantity dictionaries generated from reference images.

RELATED ART DOCUMENT

Nonpatent reference

Nonpatent reference 1: Leslie M, Novak "Performance of a High-Resolution Polarimetric SAR Automatic Target Recognition System", The Lincoln Journal, vol.6, No.1, 1993

SUMMARY OF THE INVENTION

PROBLEMS TO BE SOLVED BY THE INVENTION

Because the conventional target type identification device is constructed as above, a problem with the conventional target type identification device is that while it is necessary to extract a feature quantity showing the shape of the target from the radar observation image, a desired feature point cannot be extracted because of, for example, a restriction imposed on the resolution, or the like, and hence the target cannot be classified correctly.

A further problem is that there is also a case in which the accuracy of the extraction of a feature quantity is low because the accuracy of the extraction of a feature quantity depends on the accuracy of selection of a feature point (feature quantity) to be extracted, and the target cannot be classified correctly in such a case.

Another problem is that although the target can be classified independently upon the restriction imposed on the resolution and the accuracy of selection of a feature quantity as long as a pattern matching between a radar observation image and reference images of various models which are acquired in advance is carried out and a method of classifying the target is used, when a variation in the luminance distribution status or the like (a relative variation in the luminance value between pixels, or occurrence of a new high-luminance point which is caused by a change in the observation condition) has occurred, the luminance distribution of a filter generated diverges and the goodness of fit with a different model becomes high, and, as a result, erroneous detection has easily occurred.

The present invention is made in order to solve the above-mentioned problems, and it is therefore an object of the present invention to provide a target type identification device that can classify the target correctly even if there is a very small variation in observation specifications or the like without being affected by both a restriction imposed on the resolution and the accuracy of selection of a feature quantity.

MEANS FOR SOLVING THE PROBLEM

In accordance with the present invention, there is provided a target type identification device including: a dictionary image data generator to group reference image data showing reference images which are images of targets of known types according to both observation specifications and the known types, and generate, from reference image data of each group, dictionary image data showing a dictionary image of each group which is used for a comparison with an observation image which is an image in which a target for type determination is observed; a polygon pattern generator to extract a plurality of luminance points from the dictionary image shown by the dictionary image data of each group which is generated by the dictionary image data generator, to generate a dictionary polygon pattern which is a shape pattern of a polygon of each group whose vertices are the plurality of luminance points, and also extract a plurality of luminance points from the observation image to generate a target polygon pattern which is a shape pattern of a polygon whose vertices are the above-mentioned plurality of luminance points; and a pattern comparing device to perform a comparison of the dictionary polygon pattern of each group and the target polygon pattern which are generated by the polygon pattern generator, in which a type determining device determines the type of the target for type determination by using the result of the comparison of the polygon patterns which is performed by the pattern comparing device.

ADVANTAGES OF THE INVENTION

Because the target type identification device in accordance with the present invention is configured in such a way that the target type identification device includes the polygon pattern generator to extract a plurality of luminance points from the dictionary image shown by the dictionary image data of each group which is generated by the dictionary image data generator, to generate a dictionary polygon pattern which is a shape pattern of a polygon of each group whose vertices are the plurality of luminance points, and also extract a plurality of luminance points from the observation image to generate a target polygon pattern which is a shape pattern of a polygon whose vertices are the plurality of luminance points; and the pattern comparing device to perform a comparison of the dictionary polygon pattern of each group and the target polygon pattern which are generated by the polygon pattern generator, and the type determining device determines the type of the target for type determination by using the result of the comparison of the polygon patterns which is performed by the pattern comparing device, there is provided an advantage of being able to classify the target correctly even if there is a very small variation in the observation specifications or the like without being affected by both a restriction imposed on the resolution and the accuracy of selection of a feature quantity.

BRIEF DESCRIPTION OF THE FIGURES

[Fig. 1] Fig. 1 is a block diagram showing a target type identification device in accordance with Embodiment 1 of the present invention;
[Fig. 2] Fig. 2 is a flow chart showing the details of processing performed by the target type identification device in accordance with Embodiment 1 of the present invention;
[Fig. 3] Fig. 3 is an explanatory drawing showing an example of generation of a dictionary polygon pattern (a triangle shape pattern) which is carried out by a polygon pattern generating unit 6;
[Fig. 4] Fig. 4 is an explanatory drawing showing an example of a comparison of a dictionary polygon pattern and a target polygon pattern which is performed by a pattern comparing unit 10;
[Fig. 5] Fig. 5 is an explanatory drawing showing an example of a setting of a permissible existence region of luminance points which construct a polygon pattern;
[Fig. 6] Fig. 6 is an explanatory drawing showing an example of an evaluation index of the goodness of fit between a pair of polygon patterns;
[Fig. 7] Fig. 7 is an explanatory drawing showing a dictionary polygon pattern and a target polygon pattern which are polygonized through an integrating process performed by a pattern integrating/extending unit 12;
[Fig. 8] Fig. 8 is an explanatory drawing showing an example of conversion of a coordinate system of luminance points which construct a dictionary polygon pattern and luminance points which construct a target polygon pattern;
[Fig. 9] Fig. 9 is an explanatory drawing showing an example of evaluation of a positional relationship between a dictionary polygon pattern and a target polygon pattern;
[Fig. 10] Fig. 10 is a block diagram showing a target type identification device in accordance with Embodiment 7 of the present invention;
[Fig. 11] Fig. 11 is an explanatory drawing showing a dictionary polygon pattern and a target polygon pattern which are polygonized through an extending process performed by a pattern extending unit 17;
[Fig. 12] Fig. 12 is an explanatory drawing showing an example of a target radar image (a reference image, an observation image) in a target type identification device;
[Fig. 13] Fig. 13 is an explanatory drawing showing luminance points extracted from the target radar image of Fig. 12; and [Fig. 14] Fig. 14 is an explanatory drawing showing luminance points after a unifying process when the unifying process is carried out on the luminance points by a polygon pattern generating unit 6.

EMBODIMENTS OF THE INVENTION

Hereafter, in order to explain this invention in greater detail, the preferred embodiments of the present invention will be described with reference to the accompanying drawings. Embodiment 1.

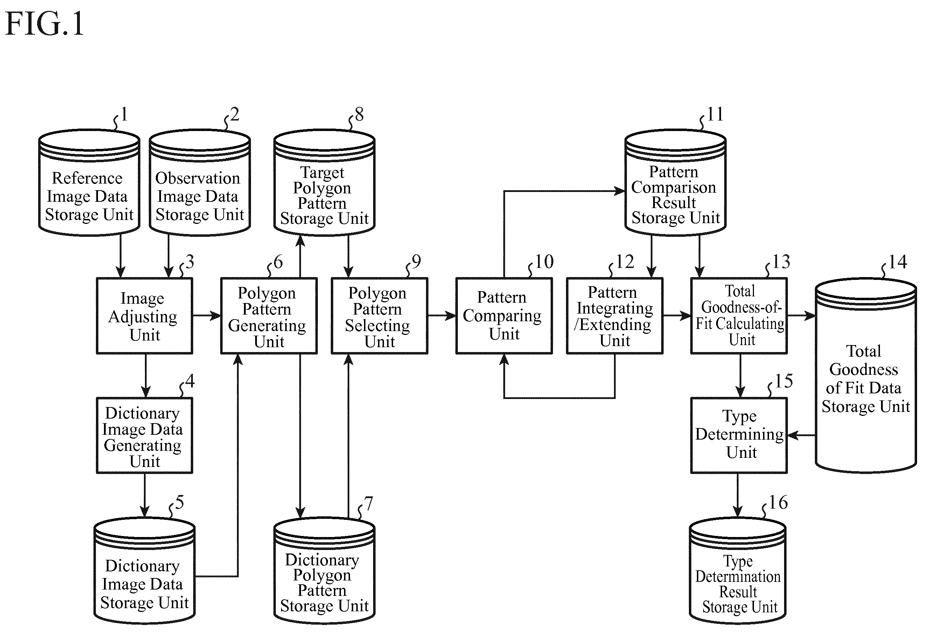

Fig. 1 is a block diagram showing a target type identification device in accordance with Embodiment 1 of the present invention.
Referring to Fig. 1, a reference image data storage unit 1 consists of a storage, such as a RAM or a hard disk, and stores both reference image data L respectively showing reference images each of which is an image of a known target of a known type (e.g., an airplane of a known model, a ship of a known model, or a vehicle of a known model), and observation specifications of the reference image data L. The reference image data storage unit 1 constructs a reference image data storage.
Each reference image data is either an actual image of a known target which was observed in advance, or a simulation image of a known target which was generated through a simulation using a computer, and plural pieces of reference image data about known targets are stored in the reference image data storage unit 1.
An observation image data storage unit 2 consists of a storage, such as a RAM or a hard disk, and stores both observation image data T showing an observation image which is an image containing an unknown target for type determination (e.g., an airplane of an unknown model, a ship of an unknown model, or a vehicle of a unknown model) which has been observed, and an observation specification of the observation image data T. The observation image data storage unit 2 constructs an observation image data storage.

Although not illustrated in Fig. 1, an image capturing device and a signal processing device are connected to an input side of the observation image data storage unit 2.

The signal processing device calculates observation image data T showing an observation image captured by the image capturing device.

An image adjusting unit 3 performs a luminance adjusting process, a size normalizing process, and an image alignment process on the plural pieces of reference image data L stored in the reference image data storage unit 1, and performs a process of outputting the reference image data L after the processes (referred to as the "reference image data L' after image adjustment" from here on) to a dictionary image data generating unit 4.

The image adjusting unit 3 also performs a luminance adjusting process, a size normalizing process, and an image alignment process on the observation image data T stored in the observation image data storage unit 2, and performs a process of outputting the observation image data T after the processes (referred to as the "observation image data T' after image adjustment" from here on) to a polygon pattern generating unit 6. The image adjusting unit 3 constructs an image adjuster.

The dictionary image data generating unit 4 performs a process of grouping the plural pieces of reference image data L' after image adjustment which are outputted from the image adjusting unit 3 according to the observation specifications and the known types of the plural pieces of reference image data L stored in the reference image data storage unit 1 (for example, when the number of types of the known targets is N, after grouping the plural pieces of reference image data L' after image adjustment into N classes, the dictionary image data generating unit groups the reference image data L' after image adjustment belonging to each class according to the observation specifications), and generating dictionary image data showing a dictionary image of each group which is used for a comparison with the observation image from the reference image data L' after image adjustment of each group. The dictionary image data generating unit 4 constructs a dictionary image data generator.

A dictionary image data storage unit 5 consists of a storage, such as a RAM or a hard disk, and stores the dictionary image data of each group which is generated by the dictionary image data generating unit 4.

The polygon pattern generating unit 6 performs a process of extracting, as luminance points, pixels each of whose luminance value is equal to or greater than a luminance threshold value from the dictionary image shown by the dictionary image data of each group which is stored in the dictionary image data storage unit 5, and also determining a plurality of combinations of luminance points which are to be used as the vertices of a polygon from the extracted plurality of luminance points, and, for each of the combinations of luminance points, generating a dictionary polygon pattern whose vertices are the luminance points included in that combination.

The polygon pattern generating unit 6 also performs a process of extracting, as luminance points, pixels each of whose luminance value is equal to or greater than the luminance threshold value from the observation image shown by the observation image data T' after image adjustment which is outputted from the image adjusting unit 3, and also determining a plurality of combinations of luminance points which are to be used as the vertices of a polygon from the extracted plurality of luminance points, and, for each of the combinations of luminance points, generating a target polygon pattern whose vertices are the luminance points included in that combination. The polygon pattern generating unit 6 constructs a polygon pattern generator.

A dictionary polygon pattern storage unit 7 consists of a storage, such as a RAM or a hard disk, and stores a plurality of dictionary polygon patterns belonging to each group which are generated by the polygon pattern generating unit 6.

A target polygon pattern storage unit 8 consists of a storage, such as a RAM or a hard disk, and stores a plurality of target polygon patterns which are generated by the polygon pattern generating unit 6.

A polygon pattern selecting unit 9 performs a process of selecting a dictionary polygon pattern which is a target for comparison from among the plurality of dictionary polygon patterns stored in the dictionary polygon pattern storage unit 7 and outputting the dictionary polygon pattern to a pattern comparing unit 10, and also selecting a target polygon pattern which is a target for comparison from among the plurality of target polygon patterns stored in the target polygon pattern storage unit 8 and outputting the target polygon pattern to the pattern comparing unit 10. The polygon pattern selecting unit 9 constructs a polygon pattern selector.

The pattern comparing unit 10 performs a process of comparing the plurality of dictionary polygon patterns belonging to each group, which are outputted from the polygon pattern selecting unit 9, and the plurality of target polygon patterns.

The pattern comparing unit 10 also performs a process of comparing a dictionary polygon pattern after an integrating process and extending process by a pattern integrating/extending unit 12 and a target polygon pattern after the integrating process and extending process.

A pattern comparison result storage unit 11 consists of a storage, such as a RAM or a hard disk, and stores comparison results acquired by the pattern comparing unit 10.

The pattern integrating/extending unit 12 performs a process of referring to the comparison results acquired by the pattern comparing unit 10, to specify a plurality of pairs each having a dictionary polygon pattern and a target polygon pattern which are in correspondence with each other from combinations each having one of the plurality of dictionary polygon patterns and one of the plurality of target polygon patterns, and integrating the dictionary polygon patterns in the specified plurality of pairs and also integrating the target polygon patterns in the specified plurality of pairs.

Further, after performing the process of specifying a pair of a dictionary polygon pattern and a target polygon pattern which are in correspondence with each other, when a luminance point which is not included in the constituting points of the target polygon pattern in the above-mentioned pair exists in the luminance points which are extracted from the observation image by the polygon pattern generating unit 6, the pattern integrating/extending unit 12 searches for a luminance point, in the dictionary image, which corresponds to that luminance point, and, when a luminance points corresponding to that luminance point exists in the dictionary image, performs a pattern extending process of including the luminance points having a correspondence with each other in the constituting points of the dictionary polygon pattern and in the constituting points of the target polygon pattern, respectively.

The pattern integrating/extending unit 12 constructs a pattern integrator, and the pattern comparing unit 10 and the pattern integrating/extending unit 12 construct a pattern comparing device.

A total goodness-of-fit calculating unit 13 performs a process of calculating total goodness of fit of each group by using the result of the comparison between the dictionary polygon pattern of each group after the integrating process and extending process by the pattern comparing unit 10, and the target polygon pattern after the integrating process and extending process.

A total goodness of fit data storage unit 14 consists of a storage, such as a RAM or a hard disk, and stores the total goodness of fit calculated by the total goodness-of-fit calculating unit 13.

A type determining unit 15 performs a process of specifying a dictionary group having the highest one of the total goodnesses of fit calculated by the total goodness-of-fit calculating unit 13 from among the dictionary groups, and determining that the type of the dictionary group is the type of the unknown target.

A type determination result storage unit 16 consists of a storage, such as a RAM or a hard disk, and stores the result of the type determination by the type determining unit 15.

A type determining device is configured with the total goodness-of-fit calculating unit 13 and the type determining unit 15.

In the example of Fig. 1, it is assumed that the reference image data storage unit 1, the observation image data storage unit 2, the image adjusting unit 3, the dictionary image data generating unit 4, the dictionary image data storage unit 5, the polygon pattern generating unit 6, the dictionary polygon pattern storage unit 7, the target polygon pattern storage unit 8, the polygon pattern selecting unit 9, the pattern comparing unit 10, the pattern comparison result storage unit 11, the pattern integrating/extending unit 12, the total goodness-of-fit calculating unit 13, the total goodness of fit data storage unit 14, the type determining unit 15, and the type determination result storage unit 16, which are the components of the target type identification device, consist of pieces of hardware for exclusive use (each of the components other than the storage units consists of, for example, either a semiconductor integrated circuit equipped with a CPU or a one chip microcomputer), respectively. As an alternative, the whole or a part of the target type identification device can consist of a computer.

For example, in a case in which the whole of the target type identification device consists of a computer, while the reference image data storage unit 1, the observation image data storage unit 2, the dictionary image data storage unit 5, the dictionary polygon pattern storage unit 7, the target polygon pattern storage unit 8, the pattern comparison result storage unit 11, the total goodness of fit data storage unit 14, and the type determination result storage unit 16 can be configured in either an internal memory or an external memory of the computer, a program in which the processes performed by the image adjusting unit 3, the dictionary image data generating unit 4, the polygon pattern generating unit 6, the polygon pattern selecting unit 9, the pattern comparing unit 10, the pattern integrating/extending unit 12, the total goodness-of-fit calculating unit 13, and the type determining unit 15 are described can be stored in a memory of the computer, and a CPU of the computer can be made to execute the program stored in that memory.

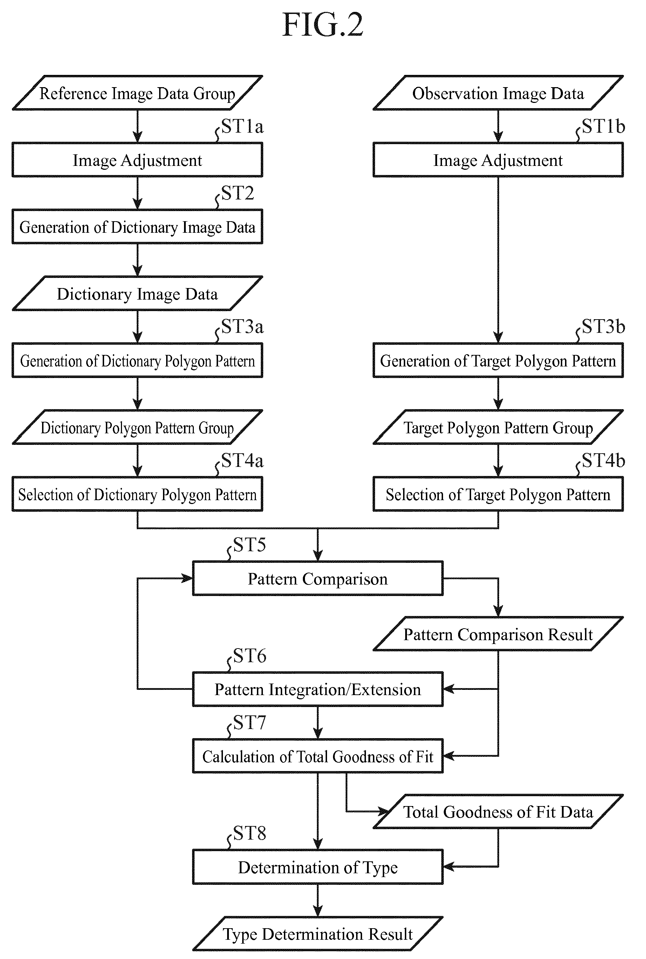

Fig. 2 is a flow chart showing the details of processing performed by the target type identification device in accordance with Embodiment 1 of the present invention.

Because a radar image which is handled in this Embodiment 1 can be subjected to scaling (size normalizing process), as pre-processing, according to provided observation specifications, unlike an optical image which is used for a point pattern matching method which is one of class identifying methods, it is not necessary to take the conversion of the size of a radar image into consideration basically.

Further, while the similarity of a positional relationship between constituting points is maintained basically in the case of an optical image, the similarity of a positional relationship between constituting points (luminance points) is not maintained due to a variation in observation specifications in the case of a radar image. Therefore, while a dictionary image can be fixed basically for each object in the case of an optical image, a different dictionary image is needed for each observation specification in the case of a radar image.

Concretely, the angle in the direction of the target or the angle of incidence at the time of capturing is grouped into classes according to ranges, and a dictionary image is prepared for each of the angle ranges. Therefore, it is necessary to prepare a dictionary image which can be ready for a luminance distribution difference between images belonging to each of the angle ranges.

Next, operations will be explained.

First, the image adjusting unit 3 performs the luminance adjusting process, the size normalizing process, and the image alignment process on the plural pieces of reference image data L (pieces of reference image data about all assumed types (models), i.e., pieces of image data about a plurality of reference images having very slight differences in observation specifications) stored in the reference image data storage unit 1, and outputs the reference image data L' after image adjustment which are the reference image data L after the processes to the dictionary image data generating unit 4 (step ST1a of Fig. 2).

More specifically, in order to improve the visibility of each reference image which is an image of each known target, the image adjusting unit 3 performs the luminance adjusting process on the plural pieces of reference image data L (a process of adjusting the luminance of each reference image) by using, for example, an LOG method of reducing a luminance difference (a contrast difference or an amplitude difference) by calculating a logarithm of the luminance of each image, or the like.

After performing the luminance adjusting process on the plural pieces of reference image data L, in order to keep the size per pixel of a target in each reference image from depending on observation specifications, the image adjusting unit 3 performs the size normalizing process (scaling) on each of the plural pieces of reference image data L stored in the reference image data storage unit 1 on the basis of the observation specifications of that reference image data L.

Because the size normalizing process (scaling) is a known technique, a detailed explanation of the process will be omitted hereafter.

After performing the luminance adjusting process and the normalizing process on the plural pieces of reference image data L, the image adjusting unit 3 arbitrarily selects, as a reference image, one reference image to be used as a reference from among the plurality of reference images after the processes, and calculates a correlation coefficient between the reference image and each remaining reference image by performing a superimposing of one of the images upon the other image by sequentially shifting the reference image and that remaining reference image from each other one by one pixel.

The image adjusting unit 3 then specifies a position where the correlation coefficient between the reference image and the remaining reference image is the largest and determines the position to be an alignment point, and performs alignment between the reference image and the remaining reference image.

Next, the image adjusting unit 3 performs the luminance adjusting process, the size normalizing process, and the image alignment process on the observation image data T stored in the observation image data storage unit 2, and outputs the observation image data T' after image adjustment which is the observation image data T after the processes to the polygon pattern generating unit 6 (step ST1b).

The luminance adjusting process, the size normalizing process, and the image alignment process on the observation image data T are the same as the above-mentioned luminance adjusting process, the above-mentioned size normalizing process, and the above-mentioned image alignment process on the reference image data L.

When receiving the reference image data L' after image adjustment of all the assumed types (models) from the image adjusting unit 3, the dictionary image data generating unit 4 generates dictionary image data for each of combinations of a target type (model) and an observation specification group, and stores the dictionary image data in the dictionary image data storage unit 5 (step ST2).

Hereafter, the process of generating dictionary image data which is performed by the dictionary image data generating unit 4 will be explained concretely.

First, the dictionary image data generating unit 4 groups the pieces of reference image data L' after image adjustment of all the types (models) which are outputted from the image adjusting unit 3 according to the observation specifications and the known types of the plural pieces of reference image data L stored in the reference image data storage unit 1.

For example, when the number of types of the known targets is N, after grouping the plural pieces of reference image data L' after image adjustment into N classes, the dictionary image data generating unit groups the reference image data L' after image adjustment belonging to each class according to the observation specifications.

For example, if the reference image data L' after image adjustment belonging to a first class can be grouped into M pieces according to the observation specifications thereof, the reference image data L' after image adjustment belonging to the first class are grouped into M groups, and, if the reference image data L' after image adjustment belonging to a second class can be grouped into G pieces according to the observation specifications thereof, the reference image data L' after image adjustment belonging to the second class are grouped into G groups.

After grouping the reference image data L' after image adjustment of all the types (models), the dictionary image data generating unit 4 generates dictionary image data showing a dictionary image which is an image of each group to be used for a comparison with an observation image from the plural pieces of reference image data L' after image adjustment belonging to each group.

As a method of generating dictionary image data, for example, there can be considered a method of generating dictionary image data by integrating the plural pieces of reference image data L' after image adjustment on the basis of, for example, indices such as correlation coefficients.

Concretely, the dictionary image data generating unit 4 performs a two-dimensional Fourier transform on the plural pieces of reference image data L' after image adjustment belonging to an identical group, for example, and vectorizes the Fourier transform results by using raster scanning to determine reference image vectors, respectively. Although a known method of vectorizing the Fourier transform results by using raster scanning after performing a two-dimensional Fourier transform on the reference image data L' after image adjustment is described as an example in this embodiment, what is necessary is just to make it possible to convert each two-dimensional reference image data L' after image adjustment into a one-dimensional reference image vector and another method can be used.

After determining reference image vectors from the plural pieces of reference image data L' after image adjustment, respectively, the dictionary image data generating unit 4 determines a matrix of inner products between the plurality of reference image vectors, and then determines a weight vector (weight value) of each reference image vector in such a way that the product of the inner product matrix and the weight vectors of the reference image vectors (vectors which consist of the weight values of the reference image vectors) is a vector of 1s.

For example, it is assumed that reference image vectors $V_1$, $V_2$, and $V_3$ are determined from the three pieces of reference image data $L'_1$, $L'_2$, and $L'_3$ after image adjustment, respectively, and the inner product matrix showing correlations between the reference image vectors is determined. At that time, the inner product of the reference image vector $V_1$ and the reference image vector $V_2$, which is an element of the inner product matrix, is expressed by $IP_{1-2}$, the inner product of the reference image vector $V_2$ and the reference image vector $V_3$, which is an element of the inner product matrix, is expressed by $IP_{2-3}$, and the inner product of the reference image vector $V_3$ and the reference image vector $V_1$, which is an element of the inner product matrix, is expressed by $IP_{3-1}$.

Further, the weight vector of the reference image vector $V_1$ is expressed by $W_1$, the weight vector of the reference image vector $V_2$ is expressed by $W_2$, and the weight vector of the reference image vector $V_3$ is expressed by $W_3$.

In this case, the weight vectors $W_1$, $W_2$, and $W_3$ are calculated in such a way that the product of each element of the inner product matrix and the weight vector is 1, as will be shown below.

$$IP_{1-2} \times W_1 = 1$$

$$IP_{2-3} \times W_2 = 1$$

$$IP_{3-1} \times W_3 = 1$$

After calculating the weight vectors $W_1$, $W_2$, and $W_3$, the dictionary image data generating unit 4 calculates the sum of the weighted reference image vectors by using the weight vectors $W_1$, $W_2$, and $W_3$, and determines the sum to be a dictionary image vector (dictionary image data showing a dictionary image), as will be shown below.

Dictionary image vector $= V_1 \times W_1 + V_2 \times W_2 + V_3 \times W_3$

According to the above-described procedure, the dictionary image vector (dictionary image data) is calculated in such a way that the correlations between the dictionary image vector and all the reference image vectors are all 1.

The polygon pattern generating unit 6 acquires the dictionary image data of each group which is stored in the dictionary image data storage unit 5, and extracts, as luminance points, pixels each of whose luminance value is equal to or greater than the luminance threshold value Sb from the dictionary image shown by the dictionary image data.

The luminance threshold value Sb is the one for extracting high-luminance points, and is equal to a lower limit, set in advance, on the luminance values of high-luminance points.

After extracting a plurality of high-luminance points from the dictionary image, the polygon pattern generating unit 6 determines a plurality of combinations of luminance points which are to be used as the vertices of an N-sided polygon (polygon) from the plurality of high-luminance points.

It is assumed that N which is the number of vertices is an integer equal to or larger than 3, and is preset as a parameter.

For example, when five high-luminance points are extracted from the dictionary image and combinations of luminance points which are to be used as the vertices of a triangle are then determined, $_5C_3 = 10$ different combinations in total are determined.

However, because no N-sided polygon can be formed when three or more of the luminance points which are to be used as the vertices of an N-sided polygon are located on the same straight line, a combination of luminance points having such a positional relationship is excluded.

After determining a plurality of combinations of luminance points which are to be used as the vertices of an N-sided polygon, the polygon pattern generating unit 6 generates, for each of the combinations of luminance points, a dictionary polygon pattern whose vertices are the luminance points included in that combination, and stores the dictionary polygon pattern in the dictionary polygon pattern storage unit 7 (step ST3a).

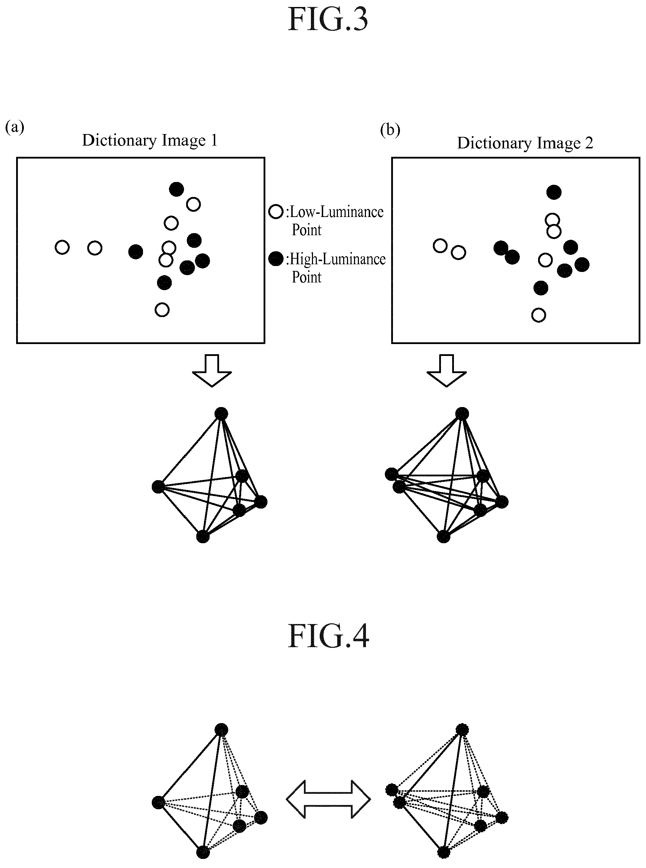

Fig. 3 is an explanatory drawing showing an example of the generation of dictionary polygon patterns (patterns each having a triangular shape) by the polygon pattern generating unit 6.

In Fig. 3, ● shows a high-luminance point whose luminance value is equal to or greater than the luminance threshold value Sb, o shows a low-luminance point whose luminance value is less than the luminance threshold value Sb, and only luminance points each shown by ● are extracted.

Especially, six high-luminance points are extracted from a dictionary image shown in Fig. 3 (a), and seven high-luminance points are extracted from a dictionary image shown in Fig. 3 (b) .

Because six luminance points are extracted in the example of Fig. 3(a), $_6C_3$=20 different dictionary polygon patterns (patterns each having a triangular shape) in total are generated.

Further, because seven luminance points are extracted in the example of Fig. 3(b), $_7C_3$=35 different dictionary polygon patterns (patterns each having a triangular shape) in total are generated.

In the figures, each dictionary polygon pattern is expressed by a triangle whose three vertices are shown by ●.

Further, when receiving the observation image data T' after image adjustment from the image adjusting unit 3, the polygon pattern generating unit 6 extracts, as luminance points, pixels each of whose luminance value is equal to or greater than the luminance threshold value Sb from the observation image shown by the observation image data T' after image adjustment.

After extracting a plurality of high-luminance points from the observation image, the polygon pattern generating unit 6 determines a plurality of combinations of luminance points which are to be used as the vertices of an N-sided polygon (polygon) from the plurality of high-luminance points, like in the case of dictionary images.

After determining a plurality of combinations of luminance points which are to be used as the vertices of an N-sided polygon, the polygon pattern generating unit 6 generates, for each combination of luminance points, a target polygon pattern whose vertices are the luminance points included in that combination, and stores the target polygon pattern in the target polygon pattern storage unit 8 (step ST3b), like in the case of dictionary images.

After the polygon pattern generating unit 6 generates a plurality of dictionary polygon patterns for each group and stores the plurality of dictionary polygon patterns in the dictionary polygon pattern storage unit 7, the polygon pattern selecting unit 9 selects a dictionary polygon pattern which is a target for comparison for each group from the plurality of dictionary polygon patterns stored in the dictionary polygon pattern storage unit 7, and outputs the dictionary polygon pattern to the pattern comparing unit 10 (step ST4a).

For example, for each of the plurality of dictionary polygon patterns stored in the dictionary polygon pattern storage unit 7, the polygon pattern selecting unit calculates the sum of the lengths of the sides which construct that dictionary polygon pattern (or the area of the pattern), and sorts the plurality of dictionary polygon patterns in ascending order of their sums of the lengths of the sides (or their pattern areas). Then, the polygon pattern selecting unit sequentially selects a dictionary polygon pattern from among the plurality of dictionary polygon patterns in ascending order of their sums of the lengths of the sides (or their pattern areas), and determines the dictionary polygon pattern to be the dictionary polygon pattern which is a target for comparison.

Further, after the polygon pattern generating unit 6 generates a plurality of target polygon patterns and stores the plurality of target polygon patterns in the target polygon pattern storage unit 8, the polygon pattern selecting unit 9 selects a target polygon pattern which is a target for comparison from among the plurality of target polygon patterns stored in the target polygon pattern storage unit 8, and outputs the target polygon pattern to the pattern comparing unit 10 (step ST4b).

Also in the selection of a target polygon pattern which is a target for comparison, the polygon pattern selecting unit calculates the sum of the lengths of the sides which construct each of the target polygon patterns (or the area of the pattern), and sorts the plurality of target polygon patterns in ascending order of their sums of the lengths of the sides (or their pattern areas), like in the case of the selection of a dictionary polygon pattern which is a target for comparison. Then, the polygon pattern selecting unit sequentially selects a target polygon pattern from among the plurality of target polygon patterns in ascending order of their sums of the lengths of the sides (or their pattern areas), and determines the target polygon pattern to be a target polygon pattern which is a target for comparison.

Whenever receiving a dictionary polygon pattern and a target polygon pattern from the polygon pattern selecting unit 9, the pattern comparing unit 10 compares the dictionary polygon pattern and the target polygon pattern, and determines whether or not there is a correspondence between the dictionary polygon pattern and the target polygon pattern (step ST5).

More specifically, the pattern comparing unit 10 calculates the goodness of fit between the dictionary polygon pattern and the target polygon pattern as a criterion by which to determine whether or not there is a correspondence between the dictionary polygon pattern and the target polygon pattern.

When the goodness of fit between the dictionary polygon pattern and the target polygon pattern is equal to or greater than a comparison threshold Sc set in advance, the pattern comparing unit 10 determines that there is a correspondence between the dictionary polygon pattern and the target polygon pattern.

After determining that there is a correspondence between the dictionary polygon pattern and the target polygon pattern, the pattern comparing unit 10 stores, as the results of the comparison of the patterns, for example, "the correspondence between that polygon pattern pair (information specifying the dictionary polygon pattern and the target polygon pattern which are in correspondence with each other), the goodness of fit between that polygon pattern pair (an evaluated value), position information about the constituting points (the high-luminance points) of the dictionary polygon pattern and the target polygon pattern which are in correspondence with each other (e.g., the coordinates of the constituting points, and the angle with which a reference side forms with a reference axis), and shape information (e.g., the lengths of the sides which construct each polygon, and the angle between two sides which construct each polygon) " in the pattern comparison result storage unit 11.

Fig. 4 is an explanatory drawing showing an example of a comparison between a dictionary polygon pattern and a target polygon pattern which is performed by the pattern comparing unit 10.

In Fig. 4, an example in which the dictionary polygon pattern and the target polygon pattern are patterns each having a triangle shape is shown.

As a method of calculating the goodness of fit between the dictionary polygon pattern and the target polygon pattern, there can be considered a method of calculating the goodness of fit from, for example, the degree of matching between the polygon patterns.

For example, when the polygons are triangles, the degree of matching between the polygon patterns can be calculated from the degree of matching between the shapes of both the triangles and the degree of matching between the positions of both the triangles, or the like.

The degree of matching between the shapes of triangles can be calculated from the degree of matching of one condition for congruence of triangles, and, as the conditions for congruence of triangles, there are "the three pairs of sides of the triangles are equal in length", "two pairs of sides of the triangles are equal in length and the angles formed by the two pairs of sides are equal in measurement", and "one pair of sides of the triangles are equal in length and the two pairs of angles at both the ends of the sides are equal in measurement. "

Hereafter, a method of calculating the degree of matching of each condition for congruence of triangles will be explained concretely.

First, the pattern comparing unit 10 calculates the length of each side which constructs the dictionary polygon pattern (the lengths of the three sides) and also calculates the length of each side which constructs the target polygon pattern (the lengths of the three sides), and, when all the three pairs of sides of both the polygon patterns are equal in length, determines a degree of matching A which is a degree of matching in the lengths of the three sides to be 1, whereas when it is not that all the three pairs of sides of both the polygon patterns are equal in length, the pattern comparing unit determines the reciprocal of the square sum of the differences between the lengths of all the sides of one of the polygon patterns and those of the other polygon pattern as the degree of matching A.

Next, the pattern comparing unit 10 pays attention to, for example, the longest one and the second longest one of the three sides which construct the dictionary polygon pattern, to calculate the length of the longest side and the length of the second longest side, and also specify the angle formed by the longest side and the second longest side.

The pattern comparing unit 10 also pays attention to, for example, the longest one and the second longest one of the three sides which construct the target polygon pattern, to calculate the length of the longest side and the length of the second longest side, and also calculate the angle formed by the longest side and the second longest side.

When the two sides of the dictionary polygon pattern are equal in length to the two sides of the target polygon pattern, the pattern comparing unit 10 determines a degree of matching $B_1$ which is a degree of matching in the lengths of the two sides to be 1, whereas when it is not that the two sides of the dictionary polygon pattern are equal in length to those of the target polygon pattern, the pattern comparing unit determines the reciprocal of the square sum of the differences between the lengths of the sides (the longest side and the second longest side) of one of the polygon patterns and those of the other polygon pattern as the degree of matching $B_1$.

Further, when the angle formed by the sides in the dictionary polygon pattern is equal to that in the target polygon pattern, the pattern comparing unit 10 determines a degree of matching $B_2$ which is a degree of matching in the angle formed by the sides to be 1, whereas when the angle formed by the sides in the dictionary polygon pattern is not equal to that in the target polygon pattern, the pattern comparing unit determines the reciprocal of the difference in the angle formed by the sides between the polygon patterns as the degree of matching $B_2$.

The pattern comparing unit 10 then calculates a degree of matching B which is a degree of matching of "the lengths of two sides and the angle formed by the two sides" by using weighting factors $w_1$ and $w_2$ which are set in advance.

$$B = (B_1 \cdot w_1 + B_2 \cdot w_2) / 2$$

Next, the pattern comparing unit 10 pays attention to, for example, the longest one of the three sides which construct the dictionary polygon pattern, to specify

the angles $\alpha_1$ and $\alpha_2$ at both the ends of the longest side (the angles each formed by the longest side and another side). Hereafter, it is assumed that "the one of the angles $\alpha_1$ and $\alpha_2$ which is equal to or larger than the other angle" is the angle $\alpha_1$.

The pattern comparing unit 10 also pays attention to, for example, the longest one of the three sides which construct the target polygon pattern, to specify the angles $\beta_1$ and $\beta_2$ at both the ends of the longest side (the angles each formed by the longest side and another side). Hereafter, it is assumed that "the one of the angles $\beta_1$ and $\beta_2$ which is equal to or larger than the other angle" is the angle $\beta_1$.

When the longest side associated with the dictionary polygon pattern is equal in length to that associated with the target polygon pattern, the pattern comparing unit 10 determines a degree of matching $C_1$ which is a degree of matching in the length of one side to be 1, whereas when the longest side associated with the dictionary polygon pattern is not equal in length to that associated with the target polygon pattern, the pattern comparing unit determines the reciprocal of the difference in the length of the side between the polygon patterns as the degree of matching $C_1$.

Further, when the angle $\alpha_1$ associated with the dictionary polygon pattern is equal to the angle $\beta_1$ associated with the target polygon pattern, the pattern comparing unit 10 determines a degree of matching $C_2$ which is a degree of matching in the angle to be 1, whereas when the angle $\alpha_1$ is not equal to the angle $\beta_1$, the pattern comparing unit determines the reciprocal of the difference between the angle $\alpha_1$ and the angle $\beta_1$ as the degree of matching $C_2$.

Similarly, when the angle $\alpha_2$ associated with the dictionary polygon pattern is equal to the angle $\beta_2$ associated with the target polygon pattern, the pattern comparing unit determines a degree of matching $C_3$ which is a degree of matching in the angle to be 1, whereas when the angle $\alpha_2$ is not equal to the angle $\beta_2$, the pattern comparing unit determines the reciprocal of the difference between the angle $\alpha_2$ and the angle $\beta_2$ as the degree of matching $C_3$.

The pattern comparing unit 10 then calculates a degree of matching C which is a degree of matching in "the length of one side and the angles at both the ends of the side" by using weighting factors $w_3$, $w_4$, and $w_5$ which are set in advance.

$$C = (C_1 \cdot w_3 + C_2 \cdot w_4 + C_3 \cdot w_5) / 3$$

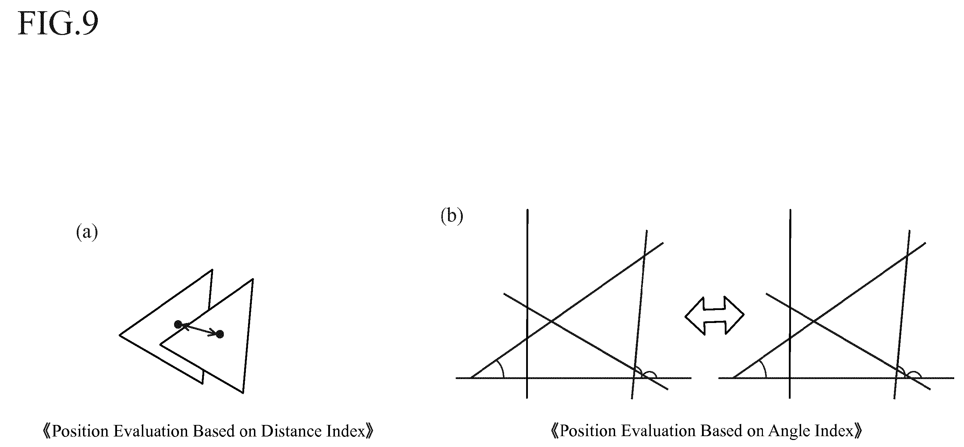

The degree of matching between the positions of the triangles is calculated as follows (refer to Fig. 9(b) which is used for an explanation in below-mentioned Embodiment 6).

First, the pattern comparing unit 10 determines, for example, an X coordinate axis of two-dimensional space in which the dictionary polygon pattern and the target polygon pattern exist, as the reference axis.

Next, the pattern comparing unit 10 calculates the angles which the sides constructing the dictionary polygon pattern with the reference axis (X coordinate axis), respectively, and specifies the smallest one of the three angles.

The pattern comparing unit 10 also calculates the angles which the sides constructing the target polygon pattern with the reference axis (X coordinate axis), respectively, and specifies the smallest one of the three angles.

When the smallest angle associated with the dictionary polygon pattern is equal to that associated with the target polygon pattern, the pattern comparing unit 10 determines a degree of matching D which is a degree of matching in the triangle position to be 1, whereas when the smallest angle associated with the dictionary polygon pattern is not equal to that associated with the target polygon pattern, the pattern comparing unit determines the reciprocal of the difference in the smallest angle between the polygon patterns as the degree D of matching.

After determining the degrees of matching "either one of A, B, and C", and D in the above-mentioned way, the pattern comparing unit 10 calculates the sum of the degrees of matching "either one of A, B, and C" and D, and determines the sum as the goodness of fit between the dictionary polygon pattern and the target polygon pattern.

Although in this embodiment the pattern comparing unit 10 determines the sum of the degrees of matching "either one of A, B, and C", and D as the goodness of fit between the dictionary polygon pattern and the target polygon pattern, the pattern comparing unit can alternatively determine the sum of values which are obtained by multiplying the degrees of matching "either one of A, B, and C" and D by weight values set in advance, respectively, or the like as the goodness of fit between the dictionary polygon pattern and the target polygon pattern.

The above-mentioned comparison threshold Sc is set in advance. For example, when a dictionary image is generated, there is provided, as the comparison threshold, a value which is acquired by subtracting a constant from the minimum or the average of the goodnesses of fit of "reference image data, among the previously-acquired reference image data about reference images of known types, which are not targets for calculation of a dictionary image" with a dictionary polygon pattern.

The pattern integrating/extending unit 12 refers to the comparison results acquired by the pattern comparing unit 10, to specify a plurality of pairs each having a dictionary polygon pattern and a target polygon pattern which are in correspondence with each other from the combinations each having one of the plurality of dictionary polygon patterns and one of the plurality of target polygon patterns, and integrates the dictionary polygon patterns in the specified plurality of pairs and also integrates the target polygon patterns in the specified plurality of pairs (step ST6).

Hereafter, the process of integrating the polygon patterns which is performed by the pattern integrating/extending unit 12 will be explained concretely.

The pattern integrating/extending unit 12 refers to the comparison results stored in the pattern comparison result storage unit 11, to specify pairs each having a dictionary polygon pattern and a target polygon pattern which are in correspondence with each other.

The pattern integrating/extending unit 12 selects two arbitrary pairs each having patterns (a dictionary polygon pattern and a target polygon pattern) from the plurality of pairs each having patterns (a dictionary polygon pattern and a target polygon pattern) which are in correspondence with each other.

In this embodiment, for convenience of explanation, one of the selected pattern pairs is denoted by F1 and the other pattern pair is denoted by F2.

Further, the dictionary polygon pattern in the pattern pair F1 is denoted by DP1 and the target polygon pattern in the pattern pair F1 is denoted by TP1. Similarly, the dictionary polygon pattern in the pattern pair F2 is denoted by DP2 and the target polygon pattern in the pattern pair F2 is denoted by TP2.

After selecting two pattern pairs F1 and F2, the pattern integrating/extending unit 12 acquires the position information on the constituting points of the dictionary polygon patterns DP1 and DP2 and the target polygon patterns TP1 and TP2 in the two pattern pairs F1 and F2, etc. from the pattern comparison result storage unit 11, checks whether or not there is an overlap between the two pattern pairs F1 and F2 in the constituting points of the target polygon patterns TP1 and TP2 and in the constituting points of the corresponding dictionary polygon patterns DP1 and DP2, and, when there is no overlap in both the constituting points, determines the two pattern pairs F1 and F2 as integration candidate pairs.

If there is a correspondence between the constituting points even if there is an overlap in the constituting points, the pattern integrating/extending unit determines the two pattern pairs F1 and F2 as integration candidate pairs.

After determining the two pattern pairs F1 and F2 as integration candidate pairs, the pattern integrating/extending unit 12 calculates goodness of fit of integration of polygon patterns at the time of integrating the integration candidate pairs.

As a method of calculating the goodness of fit of integration, there can be provided a method of newly calculating the goodness of fit between all constituting points in a dictionary polygon pattern after integration and all constituting points in a target polygon pattern after integration. This process of calculating the goodness of fit is the same as that of calculating the goodness of fit in the pattern comparing unit 10, and differs from that in the pattern comparing unit only in that the constituting points in each of the polygon patterns are increased.

When the numbers of constituting points of the pattern pairs F1 and F2 which are to be integrated are equal, the average of the goodnesses of fit of those pairs can be defined as the goodness of fit of integration.

Although the example in which the pattern integrating/extending unit 12 calculates the goodness of fit of integration at the time of integrating the integration candidate pairs is shown above, the pattern comparing unit 10 can alternatively calculate the goodness of fit of integration and the pattern integrating/extending unit 12 can acquire the goodness of fit of integration calculated by the pattern comparing unit 10.

After calculating the goodness of fit of integration, the pattern integrating/extending unit 12 compares the goodness of fit of integration and the comparison threshold Sc, and, when the goodness of fit of integration is equal to or greater than the comparison threshold Sc, integrates the two pattern pairs F1 and F2 which are the integration candidate pairs.

More specifically, when the goodness of fit of integration is equal to or greater than the comparison threshold Sc, the pattern integrating/extending unit 12 integrates the dictionary polygon pattern DP1 in the pattern pair F1 and the dictionary polygon pattern DP2 in the pattern pair F2, and also integrates the target polygon pattern TP1 in the pattern pair F1 and the target polygon pattern TP2 in the pattern pair F2.

After the pattern integrating/extending unit 12 integrates the two pattern pairs F1 and F2 which are the integration candidate pairs, the pattern comparing unit 10 stores, as the results of the comparison of the new polygon patterns which are in correspondence with each other, for example, "the correspondence between the pair $I_{F1,F2}$ of polygon patterns after integration (information specifying the dictionary polygon pattern after integration and the target polygon pattern after integration), the goodness of fit of integration between the dictionary polygon pattern after integration and the target polygon pattern after integration (evaluated value), position information about the constituting points (high-luminance points) of the dictionary polygon pattern after integration and the target polygon pattern after integration (e.g., the coordinates of the constituting points, and the angle with which the reference side forms with the reference axis), and shape information (e.g., the lengths of the sides which construct each polygon, and the angle between two sides which construct each polygon)" in the pattern comparison result storage unit 11.

After integrating the two pattern pairs F1 and F2 which are the integration candidate pairs, the pattern integrating/extending unit 12 selects one arbitrary pattern pair (a dictionary polygon pattern and a target polygon pattern) from among a plurality of yet-to-be-selected pairs each having patterns (a dictionary polygon pattern and a target polygon pattern).

In this embodiment, for convenience of explanation, the selected pattern pair is denoted by F3.

Further, the dictionary polygon pattern in the pattern pair F3 is denoted by DP3 and the target polygon pattern in the pattern pair F3 is denoted by TP3.

After selecting one pattern pair F3, the pattern integrating/extending unit 12 acquires the position information on the constituting points of the dictionary polygon pattern $I_{DP1,DP2}$ after integration and the target polygon pattern $I_{TP1,TP2}$ after integration in the polygon pattern pair $I_{F1,F2}$ into which the pairs have been integrated previously, etc. from the pattern comparison result storage unit 11, and also acquires the position information on the constituting points of the dictionary polygon pattern DP3 and the target polygon pattern TP3 in the pattern pair F3, etc.

The pattern integrating/extending unit 12 then checks whether or not there is an overlap between the polygon pattern pair $I_{F1,F2}$, into which the pairs have been integrated previously, and the pattern pair F3, in the constituting points of the target polygon patterns $I_{TP1,TP2}$ and TP3 and in the constituting points of the corresponding dictionary polygon patterns $I_{DP1,DP2}$ and DP3, and, when there is no overlap in both the constituting points, determines the polygon pattern pair $I_{F1,F2}$, into which the pairs have been integrated previously, and the pattern pair F3 as integration candidate pairs.

If there is a correspondence between the constituting points even if there is an overlap in the constituting points, the pattern integrating/extending unit determines the polygon pattern pair $I_{F1,F2}$, into which the pairs have been integrated previously, and the pattern pair F3 as integration candidate pairs.

After determining the polygon pattern pair $I_{F1,F2}$, into which the pairs have been integrated previously, and the pattern pair F3 as integration candidate pairs, the pattern integrating/extending unit 12 calculates goodness of fit of integration of polygon patterns at the time of integrating the integration candidate pairs.

After calculating the goodness of fit of integration, the pattern integrating/extending unit 12 compares the goodness of fit of integration and the comparison threshold Sc, and, when the goodness of fit of integration is equal to or greater than the comparison threshold Sc, integrates the integration candidate pairs.

More specifically, when the goodness of fit of integration is equal to or greater than the comparison threshold Sc, the pattern integrating/extending unit 12 integrates the dictionary polygon pattern $I_{DP1,DP2}$ in the polygon pattern pair $I_{F1,F2}$, into which the pairs have been integrated previously, and the dictionary polygon pattern DP3 in the pattern pair F3, and also integrates the target polygon pattern $I_{TP1,TP2}$ in the polygon pattern pair $I_{F1,F2}$ and the target polygon pattern TP3 in the pattern pair F3.

After the pattern integrating/extending unit 12 integrates the integration candidate pairs, the pattern comparing unit 10 stores, as the results of the comparison of the new polygon patterns which are in correspondence with each other, for example, "the correspondence between the pair $I_{F1,F2,F3}$ of polygon patterns after integration (information specifying the dictionary polygon pattern after integration and the target polygon pattern after integration), the goodness of fit of integration between the dictionary polygon pattern after integration and the target polygon pattern after integration (evaluated value), position information about the constituting points (high-luminance points) of the dictionary polygon pattern after integration and the target polygon pattern after integration (e.g., the coordinates of the constituting points, and the angle with which the reference side forms with the reference axis), and shape information (e.g., the lengths of the sides which construct each polygon, and the angle between two sides which construct each polygon)" in the pattern comparison result storage unit 11.

The process of integrating polygon patterns by the pattern integrating/extending unit 12 is repeatedly carried out until the number of times that the integrating process has been carried out reaches its upper limit set in advance or until the integrating process converges.

When the process of integrating the polygon patterns is completed, the pattern integrating/extending unit 12 performs a process of extending the polygon patterns (step ST6).

Hereafter, the process of extending the polygon patterns which is performed by the pattern integrating/extending unit 12 will be explained concretely.

After the process of integrating the polygon patterns is completed, when a luminance point associated with neither of the correspondences (a luminance point which is not included, as a constituting point, in any one of the pattern pairs) exists in the luminance points which are extracted from the observation image by the polygon pattern generating unit 6, the pattern integrating/extending unit 12 searches through the dictionary image for a luminance point corresponding to the above-mentioned luminance point. Hereafter, a luminance point associated with neither of the correspondences will be referred to as a yet-to-be-corresponded-to-target point Pnt.

More specifically, the pattern integrating/extending unit 12 specifies a luminance point Pnb in the observation image which is located the closest to the yet-to-be-corresponded-to-target point Pnt from among the luminance points which are extracted from the observation image and for which corresponding points have been found from the dictionary image, and calculates the distance $R_{nb-nt}$ between the yet-to-be-corresponded-to-target point Pnt and the luminance point Pnb.

The pattern integrating/extending unit 12 then searches through the luminance points extracted from the dictionary image for a luminance point in the dictionary image which is located at a distance of $R_{nb-nt}+\gamma$ or less from the luminance point (corresponding point) in the dictionary image which corresponds to the luminance point Pnb in the observation image, and determines the luminance point in the dictionary image as a luminance point in the dictionary image which corresponds to the yet-to-be-corresponded-to-target point Pnt.

When a luminance point corresponding to the yet-to-be-corresponded-to-target point Pnt exists in the dictionary image, the pattern integrating/extending unit 12 calculates the goodness of fit of integration between the dictionary polygon pattern at the time of adding the luminance point to the dictionary polygon pattern after integration, and the target polygon pattern at the time of adding the yet-to-be-corresponded-to-target point Pnt to the target polygon pattern after integration. The process of calculating the goodness of fit of integration is the same as the process of calculating the goodness of fit of integration in the process of integrating the polygon patterns.

After calculating the goodness of fit of integration, the pattern integrating/extending unit 12 compares the goodness of fit of integration and the comparison threshold Sc, and, when the goodness of fit of integration is equal to or greater than the comparison threshold Sc, adds the luminance point in the dictionary image, which corresponds to the yet-to-be-corresponded-to-target point Pnt, to the dictionary polygon pattern after integration, and also adds the yet-to-be-corresponded-to-target point Pnt to the target polygon pattern after integration.

After the pattern integrating/extending unit 12 adds the luminance points to the polygon patterns, the pattern comparing unit 10 stores, as the results of the comparison of the new polygon patterns which are in correspondence with each other, for example, "the correspondence between the pair of polygon patterns after addition of the luminance points (information specifying the dictionary polygon pattern after addition of the luminance point and the target polygon pattern after addition of the luminance point), the goodness of fit of integration between the dictionary polygon pattern after addition of the luminance point and the target polygon pattern after addition of the luminance point (evaluated value), position information about the constituting points (high-luminance points) of the dictionary polygon pattern after addition of the luminance point and the target polygon pattern after addition of the luminance point (e.g., the coordinates of the constituting points, and the angle with which the reference side forms with the reference axis), and shape information (e.g., the lengths of the sides which construct each polygon, and the angle between two sides which construct each polygon)" in the pattern comparison result storage unit 11.

Although, after that, the same extending process is repeatedly carried out also on the other yet-to-be-corresponded-to-target points in the observation image, the process of extending the polygon patterns by the pattern integrating/extending unit 12 is repeatedly carried out until the number of times that the extending process has been carried out reaches its upper limit set in advance or until the process on all the yet-to-be-corresponded-to-target points in the observation image is completed.

When the process of integrating the polygon patterns and the process of extending the polygon patterns are completed, the pattern integrating/extending unit 12 outputs a command to calculate total goodness of fit to the total goodness-of-fit calculating unit 13.

When receiving the command to calculate total goodness of fit from the pattern integrating/extending unit 12, the total goodness-of-fit calculating unit 13 extracts a correspondence pair having the highest evaluated value among the goodnesses of fit (evaluated values) of all the correspondence pairs each having a dictionary polygon pattern and a target polygon pattern after integration and extension of each group on which the integrating process and the extending process are carried out by the pattern integrating/extending unit 12, and determines either the evaluated value of the extracted pair or a value which is acquired by imposing a penalty on the evaluated value as the total goodness of fit of that group (step ST7).

As the process of calculating the total goodness of fit, there can be considered an example of calculating the goodness of fit between the dictionary polygon pattern and the target polygon pattern by using, for example, the same method as the method of calculating goodness of fit which the pattern comparing unit 10 and the pattern integrating/extending unit 12 use, and, after that, calculating, as the total goodness of fit, a value which is acquired by multiplying the goodness of fit by a penalty variable E corresponding to the number of yet-to-be-corresponded-to-target points.

As the penalty variable E, there can be considered, for example, a value which is acquired by multiplying the reciprocal (1/Nnt) of the number Nnt of yet-to-be-corresponded-to-target points by a coefficient which is provided in advance.

As an alternative, the penalty variable can be a value which is acquired by dividing the number of constituting points each having a correspondence in the observation image (i.e., the number which is acquired by subtracting the number Nnt of yet-to-be-corresponded-to-target points from the number Ntg of all constituting points of the target) by the number Ntg of all constituting points of the target.

The number Ntg of all constituting points of the target has been calculated when luminance points which are the target for generation of a target polygon pattern and which satisfy the luminance threshold value condition (each of whose luminance is equal to or greater than the luminance threshold value Sb) are extracted at the time of performing the process of generating target polygon patterns, and is outputted as additional information of target polygon patterns. Further, for each target polygon pattern, at the time of the integrating and extending processes on that target polygon pattern, the number of constituting points of the target polygon pattern is updated, and is held as additional information of the pattern comparison result. Similarly, the number of constituting points of each dictionary polygon pattern after integrating and extending processes on the polygon patterns is held as additional information of the pattern comparison result. From the difference between those pieces of constituting point number information, the number of yet-to-be-corresponded-to-target points of the polygon pattern is calculated.

After the total goodness-of-fit calculating unit 13 calculates the total goodness of fit of each dictionary group, the type determining unit 15 specifies the dictionary group having the highest one of the total goodnesses of fit, which are calculated by the total goodness-of-fit calculating unit 13, from among the dictionary groups.

After specifying the dictionary group having the highest total goodness of fit, the type determining unit 15 determines that the type of the dictionary group is the type of the unknown target, and stores the type determination result R in the type determination result storage unit 16 (step ST8).

When a plurality of dictionary groups having the highest total goodness of fit exist, the type determining unit determines that all of the types of those dictionary groups are the types of the observation target, and stores those type determination results R in the type determination result storage unit 16.

As can be seen from the above description, because the target type identification device in accordance with this Embodiment 1 includes the polygon pattern generating unit 6 to extract a plurality of luminance points from a dictionary image of each group to generate a dictionary polygon pattern whose vertices are the plurality of luminance points, and also extract a plurality of luminance points from an observation image to generate a target polygon pattern whose vertices are the plurality of luminance points, and the pattern comparing unit 10 to compare the dictionary polygon pattern of each group and the target polygon pattern, and the type determining unit 15 is configured in such a way as to determine the type of an unknown target by using the result of the comparison of the patterns which is performed by the pattern comparing unit 10, there is provided an advantage of being able to classify the target correctly even if there is a very small variation in the observation specifications or the like without being affected by both a restriction imposed on the resolution and the accuracy of selection of a feature quantity.

More specifically, because the target type identification device in accordance with this Embodiment 1 performs type identification while setting, as a target for the type identification, a polygon pattern consisting of luminance points each of whose luminance is equal to or greater than the threshold set in advance, without performing a process of extracting a feature point on the basis of a semantic analysis or the like, there is provided an advantage of being able to perform identification based on the target shape features of both a whole shape expressed by a set of partial shapes and the partial shapes without being affected by both a restriction imposed on the resolution and the accuracy of selection of a feature quantity, thereby providing high-accuracy type identification results.

Although the example in which the luminance threshold value Sb for extraction of high-luminance points is set to the polygon pattern generating unit 6 in advance in order to extract luminance points each of whose luminance value is higher than the reference high luminance value (the lower limit on the luminance values of high-luminance points), and the polygon pattern generating unit 6 extracts, as luminance points, pixels each of whose luminance value is equal to or greater than the luminance threshold value Sb from a dictionary image shown by each dictionary image data (or an observation image shown by observation image data) is shown in this Embodiment 1, there is a case in which position information on a luminance point whose luminance value is not necessarily high is significant under circumstances where variations in the luminance distributions in radar images which are caused by observation specifications cannot be disregarded.

Therefore, in order to make it possible to extract not only high-luminance points each of whose luminance value is equal to or higher than the reference high-luminance value but also luminance points each of whose luminance value is lower than the reference high-luminance value, a threshold smaller than the reference high-luminance value (the lower limit on the luminance values of high-luminance points) can be alternatively set to the polygon pattern generating unit 6 as the luminance threshold value Sb.

As such the luminance threshold value Sb, there can be considered, for example, a value which is acquired by decrementing an initial value which is set on the basis of the high-luminance point distribution status of an existing image by a ratio set in advance.

When the luminance threshold value Sb as mentioned above is set, while because not only high-luminance points but also luminance points of the order of middle luminance are extracted and polygon patterns (a dictionary polygon pattern and a target polygon pattern) are generated, there is a high possibility that noise luminance points are included in the constituting points of the polygon patterns, but there is provided an advantage of being able to make it difficult for the target type identification device to be affected by variations in the luminance distributions which are caused by observation specifications.

Although the example in which the luminance threshold value Sb for extraction of high-luminance points is set to the polygon pattern generating unit 6 in advance in order to extract luminance points each of whose luminance value is higher than the reference high luminance value, and the polygon pattern generating unit 6 extracts, as luminance points, pixels each of whose luminance value is equal to or greater than the luminance threshold value Sb from the dictionary image shown by each dictionary image data (or the observation image shown by the observation image data) is shown in this Embodiment 1, a plurality of luminance threshold values Sb can be alternatively set to the polygon pattern generating unit 6 in order to make it possible to handle luminance values which are originally continuous values as discrete values (in order to group luminance values according to luminance ranks).

For example, when a luminance threshold value Sb1 for extraction of high-luminance points, a luminance threshold value Sb2 for extraction of middle-luminance points, and a luminance threshold value Sb3 for extraction of low-luminance points are set (Sb1>Sb2>Sb3), the polygon pattern generating unit extracts pixels each of whose luminance value is equal to or greater than the luminance threshold value Sb1, as high-luminance points belonging to a luminance rank BR1, from the dictionary image shown by each dictionary image data (or the observation image shown by the observation image data).

Further, the polygon pattern generating unit extracts pixels each of whose luminance value is equal to or greater than the luminance threshold value Sb2 and is less than the luminance threshold value Sb1, as middle-luminance points belonging to a luminance rank BR2, from the dictionary image shown by each dictionary image data (or the observation image shown by the observation image data).

In addition, the polygon pattern generating unit extracts pixels each of whose luminance value is equal to or greater than the luminance threshold value Sb3 and is less than the luminance threshold value Sb2, as low-luminance points belonging to a luminance rank BR3, from the dictionary image shown by each dictionary image data (or the observation image shown by the observation image data).

After extracting high-luminance points belonging to the luminance rank BR1, middle-luminance points belonging to the luminance rank BR2, and low-luminance points belonging to the luminance rank BR3, for each luminance rank or each combination of a plurality of luminance ranks, the polygon pattern generating unit 6 determines a plurality of combinations of luminance points which are to be used as the vertices of a polygon from among the plurality of luminance points belonging to that luminance rank or those luminance ranks.

After that, for each combination of luminance points in either each luminance rank or each combination of a plurality of luminance ranks, the polygon pattern generating unit generates a polygon pattern (a dictionary polygon pattern or a target polygon pattern) whose vertices are the luminance points included in that combination.

After a target polygon pattern is generated in this way for each luminance rank, when generating, for example, polygon patterns each consisting of only high-luminance points, the polygon pattern selecting unit 9 performs comparison determination based on a positional relationship (a relative distance, the angle formed by line segments each connecting between the characteristic parts of the target, etc.) of the characteristic parts of the target which can be assumed to strongly reflect light (e.g., the model, the tail, and both the wing tips of an airplane) on a priority basis by selecting the target polygon pattern generated from the high-luminance points belonging to the luminance rank BR1, so that it can also be expected that the solution search process is speeded up, that is, the comparing processing time is shortened.

Further, when generating, for example, polygon patterns each consisting of only middle-luminance points, the polygon pattern selecting unit 9 selects the target polygon pattern generated from the middle-luminance points belonging to the luminance rank BR2, so that it can be similarly expected that the solution search process is speeded up.

In addition, when there is a necessity to make it difficult for the target type identification device to be affected by variations in the luminance distributions which are caused by observation specifications, the polygon pattern selecting unit 9 should just select, for example, a target polygon pattern generated from the high-luminance points belonging to the luminance rank BR1 and the middle-luminance points belonging to the luminance rank BR2. In this case, it becomes difficult for the target type identification device to be affected by variations in the luminance distributions, and it becomes possible to handle luminance information from the point of view of a relative variation in luminance.

Because the comparing process is limited to a comparison with a target polygon pattern having a high possibility of showing a characteristic shape of the target when selecting either a target polygon pattern consisting of only luminance points classified to the same luminance rank or a target polygon pattern consisting of luminance points classified to luminance ranks close to each other, it can also be expected that the comparison processing time is shortened.

Although the embodiment in which the dictionary image data generating unit 4 generates dictionary image data showing a dictionary image which is an image to be used for a comparison with the observation image for each group from the reference image data L' after image adjustment belonging to that group is shown in this Embodiment 1, the dictionary image data generating unit 4 can alternatively exclude luminance points each of whose frequency of appearance is lower than reference frequency from among the luminance points in the reference image shown by the reference image data L' after image adjustment belonging to the above-mentioned group and generate dictionary image data showing a dictionary image from the remaining luminance points in the reference image.

When a luminance point having low frequency of appearance has a high luminance value even though it has a low possibility of actually appearing in the observation image, the presence or absence of such a luminance point exerts a great influence upon the comparison result. Therefore, including a luminance point having low frequency of appearance in the generation of a dictionary image may cause erroneous determination of the type of the target.

Therefore, when generating dictionary image data showing a dictionary image, the dictionary image data generating unit excludes luminance points each of whose frequency of appearance is lower than the reference frequency from among the luminance points in the reference image and generates dictionary image data showing a dictionary image from the remaining luminance points in the reference image, thereby being able to reduce the possibility of causing erroneous determination of the type of the target.

Further, because the dictionary image data generating unit can narrow down the luminance points to luminance points which are assumed to be useful for type identification, to generate a polygon pattern, it can also be expected that the process of comparing polygon patterns is speeded up.

In this case, it is necessary to detect luminance points having low frequency of appearance, and, as a process of detecting luminance points having low frequency of appearance, there can be considered, for example, a process of comparing a plurality of reference images of targets of the same type (a plurality of reference images belonging different groups because they have different observation specifications), to specify, for example, luminance points which are not included in reference images the number of which is equal to or larger than a predetermined number with respect to the number of all reference images, and detecting the luminance points as luminance points having low frequency of appearance.

In this Embodiment 1, the embodiment in which the polygon pattern selecting unit 9 sorts the plurality of dictionary polygon patterns stored in the dictionary polygon pattern storage unit 7 (or the plurality of target polygon patterns stored in the target polygon pattern storage unit 8) in ascending order of their sums of the lengths of the sides constructing the patterns (or their pattern areas), sequentially selects a dictionary polygon pattern (or a target polygon pattern) from among the plurality of dictionary polygon patterns (or the plurality of target polygon patterns) in ascending order of their sums of the lengths of the sides (or their pattern areas), and determines the dictionary polygon pattern (or the target polygon pattern) to be a dictionary polygon pattern (or the target polygon pattern) which is a target for comparison. As an alternative, the polygon pattern selecting unit 9 can sort the plurality of dictionary polygon patterns stored in the dictionary polygon pattern storage unit 7 (or the plurality of target polygon patterns stored in the target polygon pattern storage unit 8) in descending order of their sums of the lengths of the sides constructing the patterns (or their pattern areas), sequentially select a dictionary polygon pattern (or a target polygon pattern) from among the plurality of dictionary polygon patterns (or the plurality of target polygon patterns) in descending order of their sums of the lengths of the sides (or their pattern areas), and determine the dictionary polygon pattern (or the target polygon pattern) to be a dictionary polygon pattern (or the target polygon pattern) which is a target for comparison.

When the polygon pattern selecting unit 9 selects a larger dictionary polygon pattern (or target polygon pattern) on a priority basis in this way, because the comparison determination can be assumed to be one between the outline shapes of targets when the comparison determination is grasped approximately, an improvement in the performance of the identification of a target having a distinctive outline shape can be expected.

Although the embodiment in which the polygon pattern selecting unit 9 selects a target polygon pattern which is a target for comparison from among the plurality of target polygon patterns stored in the target polygon pattern storage unit 8 and outputs the target polygon pattern to the pattern comparing unit 10 is shown in this Embodiment 1, the number of selectable patterns (an upper limit number) can be set to the polygon pattern selecting unit 9 in advance, and the polygon pattern selecting unit 9 can select target polygon patterns each of which is a target for comparison and whose number does not exceed the number of selectable patterns (the upper limit number) which is set in advance from among the plurality of target polygon patterns stored in the target polygon pattern storage unit 8.

In this case, because the number of times that the comparison between individual independent polygon patterns is performed is limited, the comparison processing time can be shortened.

Although the variant in which the polygon pattern selecting unit 9 selects target polygon patterns each of which is a target for comparison and whose number does not exceed the number of selectable patterns set in advance is shown above, a selectable luminance value range can be alternatively set to the polygon pattern selecting unit 9 in advance, and the polygon pattern selecting unit 9 can select, as a target polygon pattern which is a target for comparison, a target polygon pattern consisting of luminance points each of whose luminance value falls within the luminance value range set in advance from among the plurality of target polygon patterns stored in the target polygon pattern storage unit 8.

Concretely, there can be considered a method of selecting a target polygon pattern which is generated from the luminance points belonging to a luminance rank corresponding to the luminance value range set in advance, and outputting the target polygon pattern to the pattern comparing unit 10 as a target polygon pattern which is a target for comparison, or the like.

In this case, because the comparing process is limited to comparisons between polygon patterns having a high possibility of showing a characteristic shape of the target, the comparison processing time can be shortened.

Although the embodiment in which the polygon pattern selecting unit 9 pays attention to the positional relationship between the luminance points which construct a dictionary polygon pattern (or a target polygon pattern), and selects a dictionary polygon pattern (or a target polygon pattern) which is a target for comparison from among the plurality of dictionary polygon patterns stored in the dictionary polygon pattern storage unit 7 (or the plurality of target polygon patterns stored in the target polygon pattern storage unit 8) is shown in this Embodiment, the polygon pattern selecting unit 9 can alternatively pay attention to the luminance values of the luminance points which construct a dictionary polygon pattern (or a target polygon pattern), and, for example, sequentially select a dictionary polygon pattern (or a target polygon pattern) containing a larger number of luminance points belonging to a high-luminance rank on a priority basis.

Although the embodiment in which whenever receiving a dictionary polygon pattern and a target polygon pattern from the polygon pattern selecting unit 9, the pattern comparing unit 10 compares the dictionary polygon pattern and the target polygon pattern is shown in this Embodiment 1, in a case in which the premise that no lack in shape exists in the dictionary polygon pattern is established, if it is determined in the process of comparing the dictionary polygon pattern and the target polygon pattern that a partial shape corresponding to a partial shape which constructs the target polygon pattern does not exist in the partial shapes which construct the dictionary polygon pattern, the pattern comparing unit can determine that "there is no correspondence between them" and end the process of comparing the dictionary polygon pattern and the target polygon pattern.

As the case in which it can be assumed that no lack in shape exists in the dictionary polygon pattern, there is a case in which simulation images generated by a computer or the like are used as the reference images or the like.

In a case in which images which were actually captured or the likes are used as the reference images, such images are not covered by this variant because there can be a lack of the constituting points also in each of the reference images.

By ending the comparing process on a target polygon pattern having a lack in its partial shapes in progress this way, pruning of the solution search in the comparing process can be carried out and the search time can be shortened.

Although the embodiment in which when comparing a dictionary polygon pattern and a target polygon pattern which are outputted from the polygon pattern selecting unit 9, the pattern comparing unit 10 evaluates the positional relationship between the luminance points which construct the dictionary polygon pattern and the luminance points which construct the target polygon pattern, to calculate an evaluated value showing the evaluation of the positional relationship (the goodness of fit between the dictionary polygon pattern and the target polygon pattern) is shown in this Embodiment 1, the pattern comparing unit 10 can alternatively calculate the degree of matching between the luminance values of the luminance points which construct the dictionary polygon pattern and the luminance values of the luminance points which construct the target polygon pattern, and add a weight corresponding to the degree of matching to the evaluated value of the positional relationship (the goodness of fit between the dictionary polygon pattern and the target polygon pattern).

For example, there can be considered a method of calculating the luminance differences between the luminance values of the luminance points which construct the target polygon pattern and the luminance values of the luminance points, which respectively correspond to the luminance points, of the dictionary polygon pattern, and multiplying the evaluated value by the reciprocal (weight) of the sum of the luminance differences between all the pairs of corresponding points.

By using the luminance values of the luminance points for the evaluation at the time of comparison in addition to the positional relationship between the luminance points which construct the polygon patterns, the accuracy of the comparison of the polygon patterns can be improved.

Although the variant in which the pattern comparing unit 10 calculates the degree of matching between the luminance values of the luminance points which construct the dictionary polygon pattern and the luminance values of the luminance points which construct the target polygon pattern, and adds a weight corresponding to the degree of matching to the evaluated value of the positional relationship (the goodness of fit between the dictionary polygon pattern and the target polygon pattern) is shown above, the pattern comparing unit can alternatively add a weight corresponding to the luminance values of the luminance points which construct the dictionary polygon pattern to the evaluated value of the positional relationship (the goodness of fit between the dictionary polygon pattern and the target polygon pattern) without using the luminance values of the luminance points which construct the target polygon pattern because the luminance distribution of the observation image is easily affected also by a very small variation in observation specifications and its luminance values are unstable.

Concretely, the pattern comparing unit 10 checks to see the luminance rank to which each luminance point constructing the dictionary polygon pattern belongs, to count the number of luminance points belonging to each luminance rank.

Hereafter, for convenience of explanation, it is assumed that the number of high-luminance points belonging to the luminance rank BR1 is a, the number of middle-luminance points belonging to the luminance rank BR2 is b, and the number of low-luminance points belonging to the luminance rank BR3 is c.

After counting the number of luminance points belonging to each luminance rank, the pattern comparing unit 10 calculates a weight w by using constants d1, d2, and d3 respectively corresponding to the luminance ranks which are set in advance, as shown in the following equation (1).

$$w = a \times d1 + b \times d2 + c \times d3 \qquad (1)$$

For example, when the number of high-luminance points belonging to the luminance rank BR1 is 2 (a=2), the number of middle-luminance points belonging to the luminance rank BR2 is 4 (b=4), and the number of low-luminance points belonging to the luminance rank BR3 is 6 (c=6), and the constants respectively corresponding to the luminance ranks are d1=3, d2=2, and d3=1, the weight w is "20."

$$w = 2 \times 3 + 4 \times 2 + 6 \times 1 = 20$$

By adding a weight corresponding to the luminance values of the luminance points which construct the dictionary polygon pattern to the evaluated value of the positional relationship in this way, while instability of the luminance distribution of the observation image is taken into consideration, the evaluated value at the time of comparison can be improved for, for example, a dictionary polygon pattern having a larger number of luminance points belonging to the high-luminance rank. Therefore, the result of a comparison with a polygon pattern having a characteristic part is selected as a search solution candidate on a priority basis, and a high-accuracy comparison paying attention to a characteristic part can be carried out.

Although the embodiment in which the total goodness-of-fit calculating unit 13 uses the evaluated value (registered as a comparison result) of a correspondence pair of a dictionary polygon pattern and a target polygon pattern after integration and extension to calculate the total goodness of fit of the corresponding dictionary group is shown in this Embodiment 1, the actual total goodness of fit should be less than the calculated total goodness of fit when the number of lacks of the points in the target polygon pattern is extremely larger than that in the dictionary polygon pattern which forms the correspondence pair with the target polygon pattern.

Therefore, when the number of lacks of the points in the target polygon pattern is extremely larger than that in the dictionary polygon pattern, a penalty is imposed on the calculated total goodness of fit.

More specifically, when, for "a dictionary polygon pattern after integration and extension by the pattern integrating/extending unit 12, and a target polygon pattern after integration and extension by the pattern integrating/extending unit 12" which form a correspondence pair, the difference between the number of luminance points which construct the dictionary polygon pattern and the number of luminance points which construct the target polygon pattern is greater than a threshold set in advance, the total goodness-of-fit calculating unit 13 imposes a penalty corresponding to the difference on the calculated total goodness of fit.

The reciprocal of the difference, or the like can be considered as the penalty corresponding to the difference, and an example of multiplying the total goodness of fit by the reciprocal of the difference can be considered.

As a result, the accuracy of the determination of the type of the target can be improved.

Embodiment 2.

Although the embodiment in which the polygon pattern generating unit 6 extracts, as luminance points, pixels each of whose luminance value is equal to or greater than the luminance threshold value Sb from a dictionary image shown by each dictionary image data, and generates a dictionary polygon pattern which is a shape pattern of a polygon whose vertices are a plurality of luminance points is shown in above-mentioned Embodiment 1, when generating a dictionary polygon pattern from a dictionary image shown by each dictionary image data, the polygon pattern generating unit 6 can add a range of variations of a luminance distribution predicted from a difference in observation specifications to the distribution area of the dictionary polygon pattern.

Hereafter, a variation in the luminance distribution due to a difference in observation specifications will be considered.

Even if reference images are radar images of targets of the same type, when, for example, there is a difference in the angle of incidence between the reference images, the luminance distribution (the luminance values and the distribution positions) varies between the reference images because of a phenomenon called foreshortening.

In foreshortening, it is seen that the luminance position of a high-luminance point is moved towards a sight line direction from the radar, and the movement distance of the high-luminance point is deterministically determined according to the position in a height direction of a reflection point of a radio wave (the height of the position from the ground of the reflection point on the target).

Therefore, there can be considered a method of setting a permissible existence region of luminance points which construct a polygon pattern in consideration of the height from the ground of the reflection point on the target, etc.

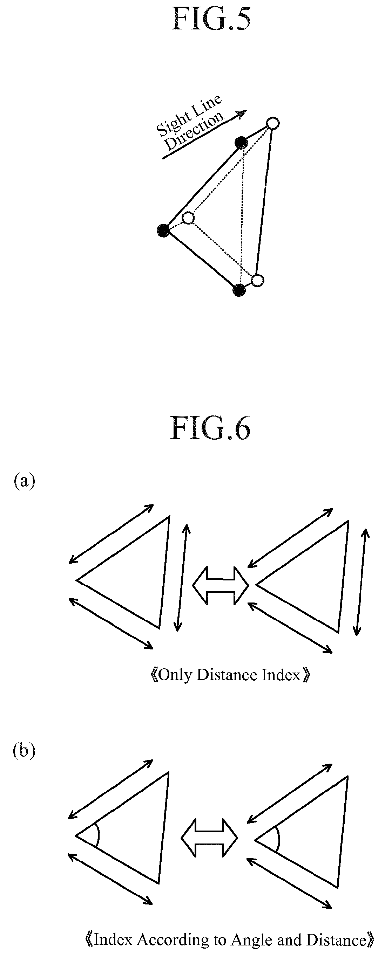

Fig. 5 is an explanatory drawing showing an example of a setting of the permissible existence region of luminance points which construct a polygon pattern.

The permissible existence region is defined by "calculating a predicted changed position of a high-luminance point which constructs a polygon pattern on the basis of assumed height information of a target (e.g., an observation target such as an airplane) which is provided in advance, according to a definitional equation or the like which is provided in advance. " In general, because the phenomenon called foreshortening becomes more intense if the altitude of the target is high, a predicted changed position proportional to the assumed height of the target is calculated.

In Fig. 5, ● shows a constituting point of a basic polygon pattern, o shows a predicted changed position of the polygon pattern according to an assumed difference in the angle of incidence, and a region enclosed by a solid line is the permissible existence region.

When generating a dictionary polygon pattern from a dictionary image shown by each dictionary image data, for example, the polygon pattern generating unit 6 generates a region in which the permissible existence region of Fig. 5 is added to the basic dictionary polygon pattern, as the dictionary polygon pattern.

As can be seen from the above description, because the polygon pattern generating unit 6 in accordance with this Embodiment 2 is configured in such a way as to predict a range of variations in the luminance distribution from the observation specifications stored in the reference image data storage unit 1, and add the range of variations to the distribution area of the generated dictionary polygon pattern, there is provided an advantage of being able to perform type identification which is resistant to variations in the observation specifications.

Embodiment 3.

In above-mentioned Embodiment 1, when comparing a dictionary polygon pattern and a target polygon pattern which are outputted from the polygon pattern selecting unit 9 and determining the presence or absence of a correspondence between the dictionary polygon pattern and the target polygon pattern, the pattern comparing unit 10 calculates the goodness of fit between the dictionary polygon pattern and the target polygon pattern.

The example in which at that time, the pattern comparing unit 10 calculates the degree of matching between the polygon patterns as the goodness of fit between the dictionary polygon pattern and the target polygon pattern is shown above. Concretely, when the polygons are, for example, triangles, the degree of matching between the polygon patterns is calculated from the degree of matching between the shapes of both the triangles and the degree of matching between the positions of both the triangles, or the likes.

Further, it is explicitly shown above that the degree of matching between the shapes of the triangles can be calculated from the degree of matching of one condition for congruence of triangles, and, as the conditions for congruence of triangles, there are "the three pairs of sides of the triangles are equal in length", "two pairs of sides of the triangles are equal in length and the angles formed by the two pairs of sides are equal in measurement", and "one pair of sides of the triangles are equal in length and the two pairs of angles at both the ends of the sides are equal in measurement."

Fig. 6 is an explanatory drawing showing an example of an evaluation index of the goodness of fit between a pair of polygon patterns.

Fig. 6(a) shows an example of defining the distances between the luminance points which construct the vertices of each triangle (the lengths of the sides) as the evaluation index (a distance evaluation index), in order to evaluate "the three pairs of sides of the triangles are equal in length" which is one of the conditions for congruence of triangles.

Further, Fig. 6(b) shows an example of defining the lengths of two sides of each triangle and the angle as the evaluation index (an angle evaluation index), in order to evaluate "two pairs of sides of the triangles are equal in length and the angles formed by the two pairs of sides are equal in measurement" which is one of the conditions for congruence of triangles.

Although the degree of matching between the shapes of triangles can be calculated by evaluating either one of the three conditions for congruence of triangles, like in the case of above-mentioned Embodiment 1, the present invention can be limited to, for example, "the three pairs of sides of the triangles are equal in length" which is one of the conditions for congruence of triangles.

Therefore, in accordance with this Embodiment 3, when comparing a dictionary polygon pattern and a target polygon pattern and determining the presence or absence of a correspondence between the dictionary polygon pattern and the target polygon pattern, the pattern comparing unit 10 calculates the distances between the luminance points which construct the dictionary polygon pattern (the lengths of the sides) and also calculates the distances between the luminance points which construct the target polygon pattern (the lengths of the sides), and calculates the degree of matching between the pairs of lengths of the three sides of both the triangles.

As a method of calculating the degree of matching between the pairs of lengths of the sides, as also explained in above-mentioned Embodiment 1, there can be considered a method of calculating a three side length which is the sum of the lengths of the three sides which construct the dictionary polygon pattern and a three side length which is the sum of the lengths of the three sides which construct the target polygon pattern, and, when both the three side lengths are equal, determining the degree of matching which is the degree of matching between the three pairs of lengths of the sides to be 1, whereas when both the three side lengths are not equal, determining the reciprocal of the difference between both the three side lengths as the degree of matching.

After evaluating the distances between the luminance points which construct the dictionary polygon pattern and the distances between the luminance points which construct the target polygon pattern as the degree of matching between the shapes of both the triangles, the pattern comparing unit 10 evaluates the degree of matching between the positions of both the triangles in the same way as that shown in above-mentioned Embodiment 1, and stores the goodness of fit between the dictionary polygon pattern and the target polygon pattern which is an evaluated value acquired by combining those evaluations (the degree A of matching which is the degree of matching between the shapes of the triangles and the degree D of matching which is the degree of matching between the positions of the triangles) in the pattern comparison result storage unit 11.

As can be seen from the above description, because the pattern comparing unit 10 in accordance with this Embodiment 3 is configured in such a way as to, when comparing a dictionary polygon pattern and a target polygon pattern, evaluate the distances between the luminance points which construct the dictionary polygon pattern and the distances between the luminance points which construct the target polygon pattern, there is provided an advantage of being able to reduce the amount of computation required for the comparison between the dictionary polygon pattern and the target polygon pattern.

More specifically, because the pattern comparing unit in accordance with this Embodiment 3 determines the presence or absence of a correspondence from only one distance evaluation index without combining indices having different dimensions, such as a distance evaluation index and an angle evaluation index, there is provided an advantage of, in addition to eliminating the necessity to perform a weighting process at the time of performing an integrated evaluation, and so on, thereby being able to simplify the arithmetic processing and reduce the amount of computation, being able to also make it easy for an interpretation engineer to perform a semantic interpretation on the evaluated value.

Embodiment 4.

Although the embodiment in which when comparing a dictionary polygon pattern and a target polygon pattern which are outputted from the polygon pattern selecting unit 9, the pattern comparing unit 10 evaluates the shape of a polygon consisting of the luminance points which construct the dictionary polygon pattern and the shape of a polygon consisting of the luminance points which construct the target polygon pattern (e.g., the lengths of the sides which construct each of the polygons, the angle formed by the two sides, etc.), and also evaluates a positional relationship in absolute position between the luminance points which construct the dictionary polygon pattern, and the luminance points which construct the target polygon pattern (e.g., the coordinates of the luminance points, and an angle which a reference side forms with a reference axis) is shown in above-mentioned Embodiment 1, only the shapes can be alternatively evaluated without evaluating the positional relationship in absolute position in a case in which polygonization is carried out by performing an integrating process on polygon patterns throughout many generations.

The term "many generations" in this embodiment is used as a one meaning that a polygon pattern on which the integrating process is not yet performed is an initial generation's polygon pattern, a polygon pattern on which the integrating process is performed once so as to be further polygonized is a polygon pattern in a generation just ahead of the early generation, and a polygon pattern on which the integrating process is further performed so as to be still further polygonized is a polygon pattern in a generation further ahead of the second generation.

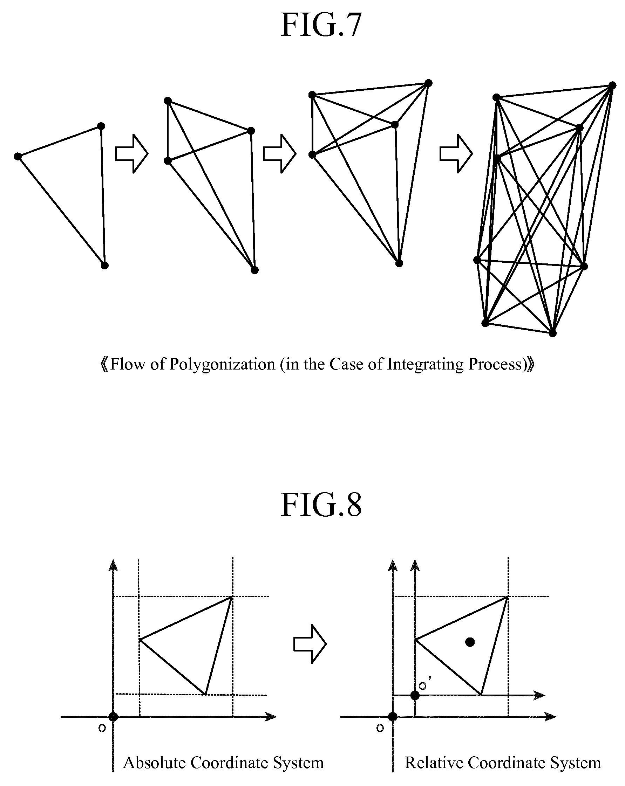

Fig. 7 is an explanatory drawing showing a dictionary polygon pattern and a target polygon pattern which are polygonized through the integrating process by the pattern integrating/extending unit 12.

In the example of Fig. 7, polygonization is repeated on each of the polygon patterns (the dictionary polygon pattern and the target polygon pattern) through the integrating process by the pattern integrating/extending unit 12 in such a way that a triangle is polygonized to a rectangle, and the rectangle is then polygonized to a pentagon.

When comparing the dictionary polygon pattern and the target polygon pattern after the integrating process by the pattern integrating/extending unit 12, the pattern comparing unit 10 calculates the goodness of fit between the dictionary polygon pattern and the target polygon pattern.

In above-mentioned Embodiment 1, for example, when the polygons are triangles, as the goodness of fit between the dictionary polygon pattern and the target polygon pattern, the degree of matching between the shapes of both the triangles and the degree of matching between the positions of both the triangles are calculated. In contrast, in this Embodiment 4, only the degree of matching between the shapes of both the triangles is calculated without calculating the degree of matching between the positions of both the triangles.

In this Embodiment 4, while the pattern comparing unit does not evaluate the degree of matching between the positions of both the triangles, if the relative position of the polygon pattern which is an integration candidate (a dictionary polygon pattern or a target polygon pattern) with respect to the polygon pattern which is an integration source (a dictionary polygon pattern or a target polygon pattern) is shifted under the influence of, for example, rotation of the polygon pattern which is the integration candidate when the pattern integrating/extending unit 12 carries out the process of integrating the polygon pattern which is the integration candidate and the polygon pattern which is the integration source, the goodness of fit of integration at the time of integrating the polygon pattern which is an integration candidate and the polygon pattern which is an integration source decreases. As a result, when the goodness of fit of integration is less than the comparison threshold Sc, those polygon patterns are not integrated.

Therefore, when polygonization is carried out through the process of integrating the polygon patterns being performed throughout many generations even if the pattern comparing unit 10 does not evaluate the degree of matching between the positions of both the triangles, the polygonization results in a substantial evaluation of the positional relationship according to the relative position.

After evaluating the degree of matching between the shapes of both the triangles, the pattern comparing unit 10 stores the degree of matching between the shapes of the triangles in the pattern comparison result storage unit 11 as the goodness of fit between the dictionary polygon pattern and the target polygon pattern.

As can be seen from the above description, because the pattern comparing unit 10 in accordance with this Embodiment 4 is configured in such a way as to, when comparing a dictionary polygon pattern and a target polygon pattern which are outputted from the polygon pattern selecting unit 9, evaluate only the shape of a polygon consisting of the luminance points which construct the dictionary polygon pattern and the shape of a polygon consisting of the luminance points which construct the target polygon pattern, there is provided an advantage of being able to, when carrying out polygonization by performing the process of integrating the polygon patterns throughout many generations, acquire the same evaluation results even if the positional relationship between the polygons is not evaluated, thereby being able to reduce the amount of processing required for the evaluation.

Further, an evaluation of the shapes and the relative position can be carried out while an allowance, which is indispensable at the time of actual operation, for a displacement of the position on the image where the target is extracted, or the like is made.

Embodiment 5.

Although the embodiment in which because a positional relationship according to a relative position is evaluated substantially when polygonization is carried out throughout many generations, only shapes are evaluated without evaluating a positional relationship according to an absolute position is shown in above-mentioned Embodiment 4, when polygonization is not carried out throughout many generations, the pattern comparing unit 10 can convert the coordinate system of the luminance points which construct a dictionary polygon pattern and a target polygon pattern into relative coordinate systems, and evaluate a positional relationship between the luminance points in the relative position coordinate systems.

Fig. 8 is an explanatory drawing showing an example of the conversion of the coordinate system of the luminance points which construct a dictionary polygon pattern and a target polygon pattern.

First, the pattern comparing unit 10 calculates a minimum rectangular region (a region enclosed by a dotted line), parallel to directions of two axes, in which all the luminance points which construct a polygon pattern (a dictionary polygon pattern or a target polygon pattern) are included, in the absolute coordinate system in which the polygon pattern exists with a point o being set as its point of origin, as shown in Fig. 8.

After calculating the minimum rectangular region in the absolute coordinate system in which the point o is set as the point of origin, the pattern comparing unit 10 converts the coordinate system of the luminance points which construct the polygon pattern into a relative coordinate system by setting the one of the four vertices (in the figure, the lower left vertex), which has the smallest values in the directions of the two axes, in the rectangular region, as the point of origin o' of the relative coordinate system.

After converting the coordinate system of the luminance points which construct the dictionary polygon pattern and the target polygon pattern into relative coordinate systems, respectively, the pattern comparing unit 10 determines the presence or absence of a correspondence between the dictionary polygon pattern and the target polygon pattern by evaluating a positional relationship between the luminance points in the relative coordinate systems.

More specifically, the pattern comparing unit 10 determines the presence or absence of a correspondence between the dictionary polygon pattern and the target polygon pattern by evaluating the degree of matching in shape and in position, or the likes between a triangle consisting of the luminance points whose coordinates are converted into those in the relative coordinate system associated with the dictionary polygon pattern, and a triangle consisting of the luminance points whose coordinates are converted into those in the relative coordinate system associated with the target polygon pattern. This process of determining the presence or absence of a correspondence is the same as that shown in above-mentioned Embodiment 1.

Before converting the coordinate system of the luminance points which construct the dictionary polygon pattern and the target polygon pattern into relative coordinate systems, the pattern comparing unit 10 determines whether or not the dictionary polygon pattern and the target polygon pattern are polygonized throughout many generations, and, when determining that polygonization is not carried out throughout many generations, converts the coordinate system of the luminance points into relative coordinate systems.

As a criterion by which to determine whether or not the dictionary polygon pattern and the target polygon pattern are polygonized throughout many generations, a criterion of determination as shown in the following (1) to (3) can be used.

(1) When performing a process of integrating polygon patterns in each generation, the pattern integrating/extending unit 12 counts the number of times that is counted from the process of integrating polygon patterns in the initial (first) generation and that the process of integrating polygon patterns has been performed, i.e., the number of generations, defines a polygon number which is the number of polygons, which is expected from the number of times that the integrating process has been performed, as a polygon number predicted value, and, when the current polygon number (when the polygon numbers of polygon patterns existing in the same generation are not equal, the current polygon number is the largest one or the average of those polygon numbers) is smaller than a polygon number threshold calculated from the polygon number predicted value, determines that the polygonization will be not carried out anymore throughout many generations. As the polygon number threshold, for example, $N_{M1}$ percent of the polygon number predicted value is used.

(2) When the number of constituting points (high-luminance points) which are extracted from each of the reference and observation images by the polygon pattern generating unit 6 is equal to or smaller than a threshold set in advance, it is determined that the polygonization is not carried out through many generations. As an example of the setting of the threshold, "defining $N_{M2}$ percent of the number of luminance points of the dictionary polygon pattern as the threshold" or the like is provided.

(3) When performing the process of integrating polygon patterns in each generation, if the number of correspondences which are extracted until then (i.e., extracted in the previous generation) is equal to or smaller than a threshold set in advance, the pattern integrating/extending unit 12 determines that the polygonization will not be carried out anymore throughout many generations. As an example of the setting of the threshold, "defining the number of predicted polygon patterns which is calculated from both the number of luminance points of the dictionary polygon pattern, and the polygon number predicted value which is predicted from the number of times that the integrating process has been performed (using the same prediction method as that of (1)) as a polygon pattern prediction number, and then defining $N_{M3}$ percent of the polygon pattern prediction number as the threshold" or the like is provided. In this embodiment, as an example of a method of calculating the polygon pattern prediction number, there is a method of defining a value which is acquired by dividing the number of luminance points by the polygon number predicted value. $N_{M1}$ to $N_{M3}$ are set by an operator, such as an interpretation engineer, in advance.

As can be seen from the above description, because the pattern comparing unit 10 in accordance with this Embodiment 5 is configured in such a way as to, when evaluating a positional relationship between the luminance points which construct a dictionary polygon pattern, and the luminance points which construct a target polygon pattern, evaluate the positional relationship between the luminance points in relative position coordinate systems, there is provided an advantage of being able to evaluate the positional relationship while making an allowance for a displacement of the position on the image where the target is extracted, or the like, to some extent.

Embodiment 6.

In above-mentioned Embodiment 1, the embodiment in which when polygons consisting of the luminance points which construct a dictionary polygon pattern and a target polygon pattern which are outputted from the polygon pattern selecting unit 9 are triangles at the time of evaluating a positional relationship between the dictionary polygon pattern and the target polygon pattern, the pattern comparing unit 10 evaluates the degree of matching between the shapes of the triangles and the degree of matching between the positions of the triangles is shown.

Further, in above-mentioned Embodiment 1, the evaluation of the degree of matching between the positions of the triangles is carried out by calculating the angles which the sides which construct the dictionary polygon pattern form with a reference axis (an X coordinate axis), respectively, to specify the smallest one of the three angles, also calculating the angles which the sides which construct the target polygon pattern form with the reference axis (the X coordinate axis), respectively, to specify the smallest one of the three angles, and performing a comparison between the smallest angles (refer to Fig. 9(b)).

As a result, while the degree of matching between the positions of the triangles can be evaluated, the amount of processing required for the calculation of the evaluation index is large because it is necessary to perform calculations of the angles and so on.

Therefore, in this Embodiment 6, an explanation will be made as to an embodiment of evaluating the degree of matching between the positions of the triangles without performing calculations of the angles which result in an increase in the amount of processing required for calculation.

In accordance with this Embodiment 6, the pattern comparing unit 10 calculates the distance between the polygon consisting of the luminance points which construct the dictionary polygon pattern, and the polygon consisting of the luminance points which construct the target polygon pattern, and evaluates a positional relationship between the polygon patterns which form the polygons (the degree of matching between the positions of the triangles) by using the distance as an evaluation index (a distance evaluation index).

Concretely, the pattern comparing unit performs the process as follows.

Fig. 9 is an explanatory drawing showing an example of the evaluation of a positional relationship between the dictionary polygon pattern and the target polygon pattern.

Especially, Fig. 9 (a) shows an example of the evaluation using the distance evaluation index, and Fig.

9(b) shows an example of an evaluation using an angle evaluation index.

When using the distance evaluation index, the pattern comparing unit 10 calculates the centroid position of the triangle (polygon) consisting of the luminance points which construct the dictionary polygon pattern, and also calculates the centroid position of the triangle (polygon) consisting of the luminance points which construct the target polygon pattern, as shown in Fig. 9(a).

The pattern comparing unit 10 then calculates the distance between the centroid position of the triangle associated with the dictionary polygon pattern, and the centroid position of the triangle associated with the target polygon pattern.

It is assumed that the shorter distance, the higher goodness of fit between the dictionary polygon pattern and the target polygon pattern (the higher degree of matching between the positions of the triangles).

After evaluating the distance between the centroid positions of both the triangles as the degree of matching between the positions of both the triangles, the pattern comparing unit 10 evaluates the degree of matching between the shapes of both the triangles in the same way as that shown in above-mentioned Embodiment 1, and stores the goodness of fit between the dictionary polygon pattern and the target polygon pattern, which is an evaluated value which is acquired by combining those evaluations, in the pattern comparison result storage unit 11.

As can be seen from the above description, the pattern comparing unit 10 in accordance with this Embodiment 6 is configured in such a way as to, when evaluating a positional relationship between a dictionary polygon pattern and a target polygon pattern which are outputted from the polygon pattern selecting unit 9, evaluate the distance between a polygon consisting of luminance points which construct the dictionary polygon pattern, and a polygon consisting of luminance points which construct the target polygon pattern, there is provided an advantage of being able to reduce the amount of processing required for the calculation of the evaluation index.

Further, because both the evaluation index for the degree of matching between the shapes of the triangles and the evaluation index for the degree of matching between the positions of the triangles are distance evaluation indices, semantic interpretation at the time of performing an overall evaluation of the dictionary polygon pattern and the target polygon pattern becomes simplified.

Embodiment 7.

Although the embodiment in which after performing the integrating process of integrating the dictionary polygon patterns in a plurality of pairs and integrating the target polygon patterns in the plurality of pairs, the pattern integrating/extending unit 12 performs the pattern extending process of including isolated luminance points in the constituting points of the dictionary polygon pattern and the target polygon pattern is shown in above-mentioned Embodiment 1, an embodiment of performing only a pattern extending process without performing the integrating process will be explained in this Embodiment 7.

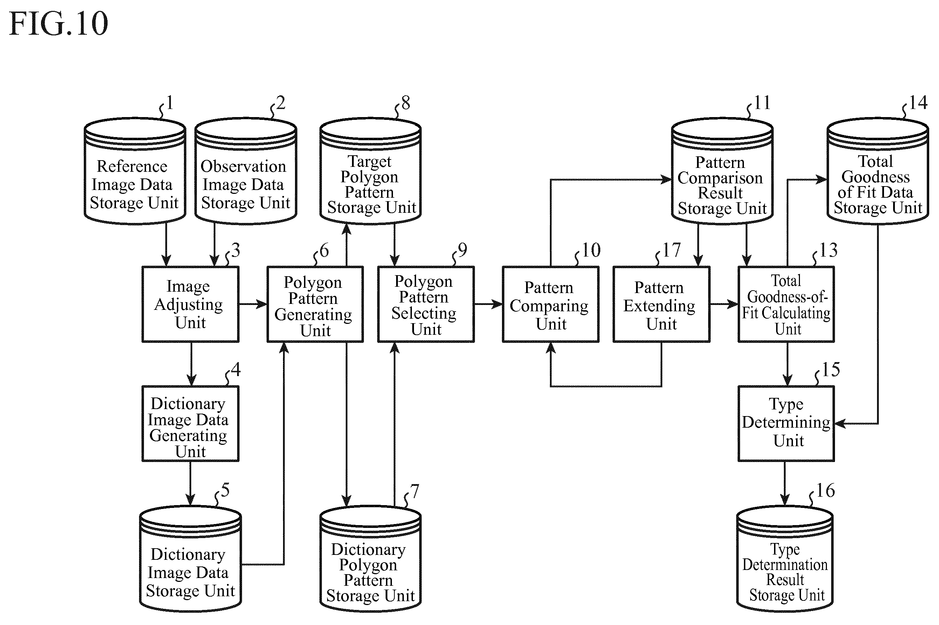

Fig. 10 is a block diagram showing a target type identification device in accordance with Embodiment 7 of the present invention. In the figure, because the same reference numerals as those shown in Fig. 1 denote the same components or like components, the explanation of the components will be omitted hereafter.

A pattern extending unit 17 consists of, for example, either a semiconductor integrated circuit equipped with a CPU, or a one chip microcomputer, and performs a pattern extending process of referring to comparison results stored in a pattern comparison result storage unit 11, to specify a pair of a dictionary polygon pattern and a target polygon pattern which are in correspondence with each other from combinations each having one of a plurality of dictionary polygon patterns and one of a plurality of target polygon patterns, and, when a luminance point which is not included in the constituting points of the target polygon pattern in the above-mentioned pair exists in luminance points which are extracted from an observation image by a polygon pattern generating unit 6, searching through the dictionary image for a luminance point corresponding to the luminance point, and, when a luminance point corresponding to the luminance point exists in the dictionary image, including the luminance point in the dictionary image in the constituting points of the dictionary polygon pattern and also including the above-mentioned existing luminance point in the constituting points of the target polygon pattern.

A pattern comparing device is configured with a pattern comparing unit 10 and the pattern extending unit 17.

Next, operations will be explained.

After repeatedly carrying out the process of integrating a plurality of polygon patterns (dictionary polygon patterns or target polygon patterns) as shown in Fig. 7, the pattern integrating/extending unit 12 in accordance with above-mentioned Embodiment 1 performs the extending process of including a luminance point (isolated point) which has not been incorporated through the integrating process in the constituting points of a polygon pattern (a dictionary polygon pattern or a target polygon pattern). More specifically, the extending process is performed as needed and is auxiliary to the integrating process.

Because the integrating process is the one of combining polygon patterns each consisting of a plurality of luminance points, the efficiency of the polygonizing process becomes high as compared with the extending process of adding luminance points (isolated point) one by one.

However, because it is necessary to perform an evaluation of whether or not to be able to perform integration for all combinations of polygon patterns (triangle patterns of N=3) which are initially-generable minimum units when all the luminance points which are extracted from the reference image and the observation image by the polygon pattern generating unit 6 are set to be targets for evaluation of the integrating process, the amount of processing is dependent on the number of luminance points extracted by the polygon pattern generating unit 6.

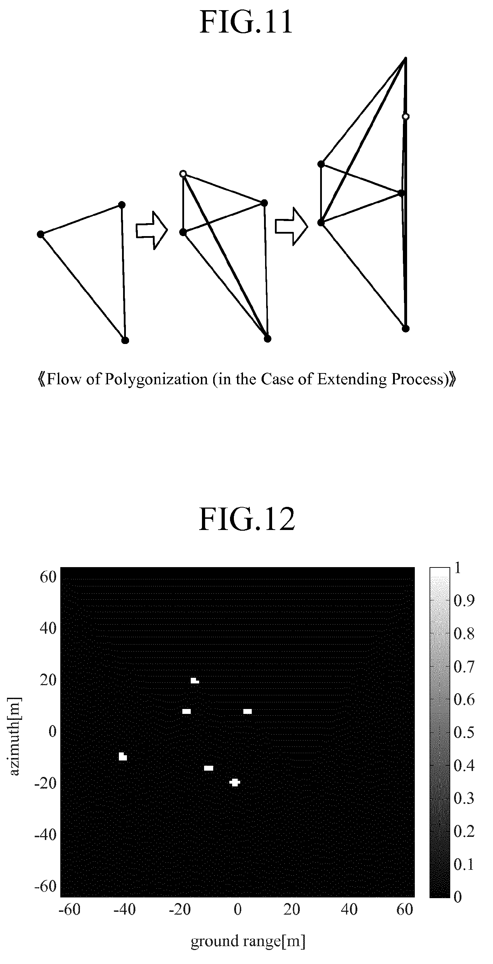

Fig. 11 is an explanatory drawing showing a dictionary polygon pattern and a target polygon pattern which are polygonized through the extending process by the pattern extending unit 17.

Although the pattern extending unit 17 does not perform the process of integrating polygon patterns, but performs the process of extending polygon patterns, like the pattern integrating/extending unit 12 shown in Fig. 1.

More specifically, when a yet-to-be-corresponded-to-target point Pnt which is a luminance points corresponding to neither of the correspondences (a luminance point included, as a constituting point, in neither of the pattern pairs) exists in the luminance points which are extracted from the observation image by the polygon pattern generating unit 6, if a luminance point corresponding to the yet-to-be-corresponded-to-target point Pnt exists in the dictionary image, the pattern extending unit 17 calculates the goodness of fit of integration between the dictionary polygon pattern after integration to which the luminance point is added, and the target polygon pattern after integration to which the yet-to-be-corresponded-to-target point Pnt is added, and, when the goodness of fit of integration is equal to or greater than a comparison threshold Sc, adds the luminance point, in the dictionary image, which corresponds to the yet-to-be-corresponded-to-target point Pnt to the dictionary polygon pattern after integration and also adds the yet-to-be-corresponded-to-target point Pnt to the target polygon pattern after integration.

Accordingly, for each yet-to-be-corresponded-to-target point Pnt, the pattern extending unit 17 performs an evaluation of whether or not to incorporate the yet-to-be-corresponded-to-target point Pnt into the polygon pattern. Therefore, the pattern extending unit can perform a comprehensive search for yet-to-be-corresponded-to-target points Pnt.

However, when performing polygonization only by performing the process of extending polygon patterns without performing the process of integrating polygon patterns, the pattern extending unit performs an evaluation of whether or not to incorporate every yet-to-be-corresponded-to-target point Pnt into the polygon pattern in all the generations of polygon patterns, and therefore the number of generations increases incomparably with that in the integrating process.

Further, the amount of processing required for the extending process increases, through successive generations, in proportion to the number of pairs each having polygon patterns which exist in each generation and which are in correspondence with each other, and the number of luminance points on the image. Further, the amount of processing required for a process of determining whether or not there is an overlap between generated polygons, a process of removing overlaps, and so on also increases. Accordingly, even if the number of polygon patterns in the initial generation can be reduced, the target type identification device cannot escape from an increase in the amount of processing required for the extending process according to an increase in the number of subsequent generations, and an increase in the amount of processing required for the overlap determination and the overlap removal.

Therefore, the necessity to set all the luminance points which are extracted from the observation image by the polygon pattern generating unit 6 as targets to be incorporated into a final polygon pattern will be considered on the basis of the characteristics of the image.

For example, because a deformation or the like of the distribution shape of the luminance points hardly occurs when the reference image and the observation image are optical images, the process of determining correspondences should be performed after each polygon pattern into which all luminance points are incorporated substantially comprehensively is generated.

When the reference image and the observation image are radar images, it is not necessarily effective to incorporate all luminance points into each polygon pattern and it is important to select luminance points which are targets to be incorporated into each polygon pattern because a variation in the luminance positions due to noise and a very small variation in the observation specification difference cannot be neglected.

Accordingly, generating an initial generation's polygon pattern from limited luminance points, and then setting only limited luminance points which satisfy a reference of evaluated values as targets for the extending process of incorporating luminance points into each polygon pattern is considered to be an effective means.

Further, preventing increase in the amount of processing required for the extending process and the amount of processing required for the overlap determining process by ending the extending process when the number of generations of polygon patterns or the number of polygon patterns in each generation exceeds a threshold set in advance is considered to be an effective means.

By performing the above-mentioned process, when the reference image and the observation image are radar images, the luminance points to be incorporated into each polygon pattern in the extending process are narrowed down.

Therefore, the pattern extending unit 17 selects one yet-to-be-corresponded-to-target point Pnt in order from among a plurality of yet-to-be-corresponded-to-target points Pnt which are luminance points for extension, and calculates goodness of fit of integration (evaluated value) at the time of incorporating the yet-to-be-corresponded-to-target point Pnt into the polygon pattern.

Next, the pattern extending unit 17 compares the goodness of fit of integration (evaluated value) at the time of incorporating each yet-to-be-corresponded-to-target point Pnt into the polygon pattern, extends the polygon pattern by incorporating a yet-to-be-corresponded-to-target point Pnt into the polygon pattern in descending order of the goodness of fit of integration (evaluated value), and ends the extending process when the number of generations of polygon patterns after extension or the number of polygon patterns in each generation exceeds the threshold set in advance.

While the above-mentioned threshold should just be set in advance by an operator, such as an interpretation engineer, several percent of the number of luminance points for extension in the initial generation can be considered, for example, as the threshold for the number of generations of polygon patterns.

In this Embodiment 7, the polygon pattern generating unit 6 generates the initial generation's polygon patterns on the basis of an initial generation selection criterion (order), such as "descending/ascending order of the sum of side lengths, area, or the like", which is set in advance by an operator, such as an interpretation engineer.

At that time, while the number of polygon patterns which are to be generated in the initial generation should just be set in advance by an operator, such as an interpretation engineer, several percent of a maximum number of generated polygon patterns in the initial generation which is calculated as the number of combinations of all the luminance points can be considered as the number of polygon patterns which are to be generated in the initial generation.

As can be seen from the above description, because the pattern extending unit 17 in accordance with this Embodiment 7 is configured in such a way as to perform polygonization only by performing the process of extending polygon patterns without performing the process of integrating polygon patterns, there is provided an advantage of being able to reduce the amount of processing dependently upon a criterion such as the number of luminance points to be incorporated into each polygon pattern as compared with the case of performing the process of integrating polygon patterns.

Further, because the luminance points to be incorporated into each polygon pattern are narrowed down, there is provided an advantage of being able to reduce the amount of processing required for the extending process and so on without causing degradation in the type identification performance even in the case of carrying out polygonization only by performing the process of extending polygon patterns.

Embodiment 8.

Although the embodiment in which the polygon pattern generating unit 6 extracts, as luminance points, pixels each of whose luminance value is equal to or greater than the luminance threshold value from the dictionary image shown by the dictionary image data of each group which is stored in the dictionary image data storage unit 5, also determines a plurality of combinations of luminance points which are to be used as the vertices of a polygon from among the extracted plurality of luminance points, and, for each of the combinations of luminance points, generates a dictionary polygon pattern whose vertices are the luminance points included in that combination is shown in above-mentioned Embodiment 1, the polygon pattern generating unit can perform a process of unifying each group of luminance points which are included in the plurality of luminance points extracted from the dictionary image shown by the dictionary image data of each group and each of whose distance to any other luminance point is equal to or shorter than a distance threshold set in advance, into one luminance point, determine a plurality of combinations of luminance points which are to be used as the vertices of a polygon from among the luminance points after the unifying process, and, for each of the combinations of luminance points, generate a dictionary polygon pattern whose vertices are the luminance points included in that combination.

Further, although the embodiment in which the polygon pattern generating unit 6 extracts, as luminance points, pixels each of whose luminance value is equal to or greater than the luminance threshold value from the observation image shown by the observation image data T' after image adjustment which is outputted from the image adjusting unit 3, also determines a plurality of combinations of luminance points which are to be used as the vertices of a polygon from among the extracted plurality of luminance points, and, for each of the combinations of luminance points, generates a dictionary polygon pattern whose vertices are the luminance points included in that combination is shown in above-mentioned Embodiment 1, the polygon pattern generating unit can perform a process of unifying each group of luminance points which are included in the plurality of luminance points extracted from the observation image shown by the observation image data T' after image adjustment which is outputted from the image adjusting unit 3 and each of whose distance to any other luminance point is equal to or shorter than the distance threshold set in advance, into one luminance point, determine a plurality of combinations of luminance points which are to be used as the vertices of a polygon from among the luminance points after the above-mentioned unifying process, and, for each of the combinations of luminance points, generate a dictionary polygon pattern whose vertices are the luminance points included in that combination.

Fig. 12 is an explanatory drawing showing an example of a target radar image (a reference image or an observation image) in the target type identification device.

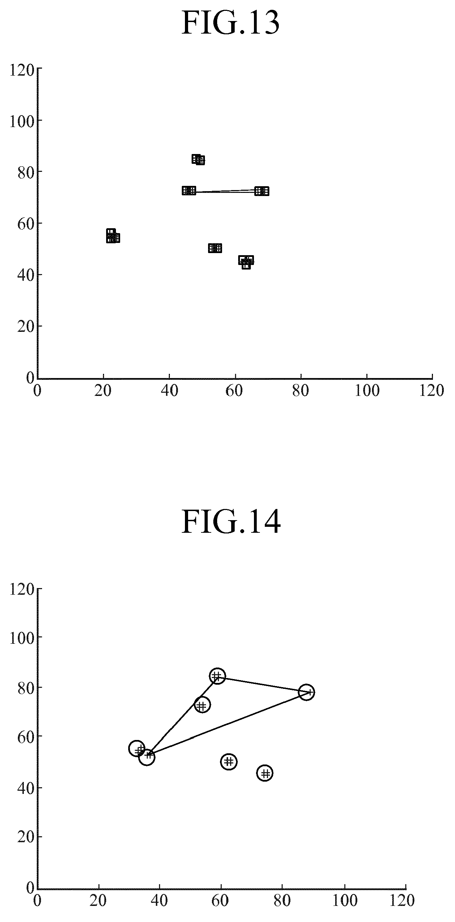

Fig. 13 is an explanatory drawing showing the luminance points extracted from the target radar image shown in Fig. 12.

□ shown in Fig. 12 denotes a luminance point which is a target for generation of a polygon pattern, and there are portions in each of which a plurality of points each denoted by □ are crowded.

Although it seems like that, in the example of Fig. 12, point shapes corresponding to a plurality of luminance points are distributed in such a way that they are scattered over the image, the plurality of luminance points are actually divided into some groups, as shown in Fig. 13, and a plurality of luminance points are distributed crowdedly (a plurality of points each denoted by □ are crowded) in each of the groups.

Further, although in the example of Fig. 13 a triangle connecting between three points located close to each other and each denoted by □ is generated as a polygon pattern, this polygon pattern substantially has a linear shape, and is a one which is hard to be referred to as a polygonal shape. Such a polygon pattern is not suitable as a target for evaluation of an correspondence, and an useless evaluation process occurs.

Fig. 14 is an explanatory drawing showing luminance points after the unifying process when the process of unifying luminance points is performed by the polygon pattern generating unit 6.

A plurality of luminance points each existing within o are a luminance unified point (a group of luminance points) acquired through the unifying process, and, as shown in Fig. 14, a triangle connecting between three points (luminance unified points) each denoted by ○ is generated as a polygon pattern. As a result, as shown in Fig. 13, the generation of an unnecessary polygon pattern by connecting luminance points located close to each other (a polygon pattern which is hard to be referred to as a polygonal shape and which is assumed not to show the characteristic shape of the target) is excluded. Further, because luminance points located close to each other are not handled as distribution points different from each other, the generation of an unnecessary polygon pattern resulting from the generation of similar polygon patterns can be eliminated and an efficient evaluation of correspondences can be achieved.

Although the distance threshold which the polygon pattern generating unit 6 uses when performing the process of unifying luminance points can be set in advance by an operator, such as an interpretation engineer, for example, several percent of a larger value $L_{max}$ of the lengths Lx and Ly in directions of two axes of the observation image (or the reference image) can be considered as that distance threshold.

Further, for example, in the observation image (or the reference image), the differences $P_{xmax}-P_{xmin}$ and $P_{ymax}-P_{ymin}$ between the maximums $P_{xmax}$ and $P_{ymax}$ and the minimums $P_{xmin}$ and $P_{ymin}$ of the coordinates in the axial directions of all the luminance points which are targets to be incorporated into a polygon pattern are calculated, and several percent of a larger value $P_{smax}$ of the differences $P_{xmax}-P_{xmin}$ and $P_{ymax}-P_{ymin}$ can be considered as the distance threshold.

As can be seen from the above description, because the polygon pattern generating unit 6 in accordance with this Embodiment 8 is configured in such a way as to generate a polygon pattern after performing the process of unifying luminance points, there is provided an advantage of being able to perform an efficient evaluation of correspondences.

In above-mentioned Embodiment 1, the embodiment in which when performing a comparison of a dictionary polygon pattern and a target polygon pattern which are outputted from the polygon pattern selecting unit 9, the pattern comparing unit 10 evaluates a positional relationship between the luminance points which construct the dictionary polygon pattern and the luminance points which construct the target polygon pattern, and calculates an evaluated value of the positional relationship (the goodness of fit between the dictionary polygon pattern and the target polygon pattern) is shown, and, as one concrete example of the embodiment, the example in which the pattern comparing unit calculates the luminance differences between the luminance values of the luminance points which construct the target polygon pattern and the luminance values of the luminance points of the dictionary polygon pattern which respectively correspond to the luminance points, and multiplies the evaluated value by the reciprocal (weight) of the sum of the luminance differences between all the corresponding points to use the luminance values of the luminance points for the evaluation at the time of comparison is shown.

In this Embodiment 8, the pattern comparing unit 10 can calculate the sum of the plurality of luminance values which construct each luminance unified point into which luminance points are unified by the polygon pattern generating unit 6, and determine the sum as the luminance value of that luminance unified point.

In this case, when multiplying the evaluated value by the reciprocal (weight) of the sum of the luminance differences of all the corresponding points, the pattern comparing unit 10 can use the luminance differences between the luminance value of each luminance unified point and the luminance values of the luminance points corresponding to that luminance unified point.

As a result, because it becomes possible to handle each luminance unified point as one very-high-luminance point, type identification in consideration of "position and luminance" which is close to the point of view of an interpretation engineer becomes possible.

Further, in this Embodiment 8, instead of counting the number of luminance points which construct each luminance unified point into which luminance points are unified by the polygon pattern generating unit 6, and using the luminance values of the luminance points for the evaluation at the time of comparison, the pattern comparing unit 10 can use the number of luminance points which construct each luminance unified point for the evaluation at the time of comparison.

For example, it is assumed that luminance points which are the three vertices of a triangle which constructs a dictionary polygon pattern are denoted by

$a_1$, $a_2$, and $a_3$, respectively, and the luminance point $a_1$ is a luminance unified point into which three luminance points are unified, the luminance point $a_2$ is a luminance unified point into which three luminance points are unified, and the luminance point $a_3$ is a one into which no luminance points are unified.

Further, it is assumed that luminance points which are the three vertices of a triangle which constructs a target polygon pattern are denoted by $b_1$, $b_2$, and $b_3$, respectively, and the luminance point $b_1$ is a luminance unified point into which two luminance points are unified, the luminance point $b_2$ is a luminance unified point into which two luminance points are unified, and the luminance point $b_3$ is a luminance unified point into which two luminance points are unified.

In this case, the numbers of luminance points of the luminance unified points which construct the triangle associated with the dictionary polygon pattern are 3, 3, and 1, respectively, the numbers of luminance points of the luminance unified points which construct the triangle associated with the target polygon pattern are 2, 2, and 2, respectively, and the differences between the numbers of luminance points of the luminance unified points are 1, 1, and 1, respectively. Because the square sum of these differences is 3, 3 which is this square sum of the differences between those numbers is used as a penalty of the evaluated value.

More specifically, when the differences between the numbers of "luminance points which construct their respective luminance unified points" are all zero (their numbers of luminance points are equal), the pattern comparing unit 10 does not impose any penalty to the goodness of fit (evaluated value) between the dictionary polygon pattern and the target polygon pattern which is calculated by using the same method as that shown in above-mentioned Embodiment 1, but reduces the goodness of fit (evaluated value) between the dictionary polygon pattern and the target polygon pattern with increase in the differences between the numbers of luminance points of their respective luminance unified points.

As a result, type identification in consideration of "position and luminance", and "whole distribution and local crowding" which are close to the point of view of an interpretation engineer becomes possible.

Further, in this Embodiment 8, the pattern comparing unit 10 can calculate the area of the distribution area of the plurality of luminance points which construct each luminance unified point into which luminance points are unified by the polygon pattern generating unit 6, and, instead of using the luminance values of the luminance points for the evaluation at the time of comparison, use the area of the distribution area for the evaluation at the time of comparison.

The area of the distribution area of the plurality of luminance points which construct each luminance unified point can be the area of a polygon whose vertices are the plurality of luminance points which construct that luminance unified point, or the area of a minimum rectangular region containing the plurality of luminance points which construct that luminance unified point, and having sides respectively parallel to the directions of the two axes.

Concretely, the differences between the maximums $PC_{xmax}$ and $PC_{ymax}$ and the minimums $PC_{xmin}$ and $PC_{ymin}$ in the directions of the two axes in a region which contains the plurality of luminance points which construct each luminance unified point are calculated, and the product of those differences $(PC_{xmax}-PC_{xmin}) \times (PC_{ymax}-PC_{ymin})$ can be determined as the area of the distribution area of the plurality of luminance points.

When the number of differences between the areas of the distribution areas associated with the dictionary polygon pattern and the areas of the distribution areas associated with the target polygon pattern is zero (the pairs of areas are equal), the pattern comparing unit 10 does not impose any penalty to the goodness of fit (evaluated value) between the dictionary polygon pattern and the target polygon pattern which is calculated by using the same method as that shown in above-mentioned Embodiment 1, but reduces the goodness of fit (evaluated value) between the dictionary polygon pattern and the target polygon pattern with increase in the differences between the areas of the distribution areas.

As a result, although it is preferable to handle the shape of the entire target as a group of single luminance points, it becomes possible to also take into consideration local broadening to perform the evaluation, and type identification in consideration of "whole distribution and local broadening" which is close to the point of view of an interpretation engineer becomes possible.

While the invention has been described in its preferred embodiments, it is to be understood that an arbitrary combination of two or more of the above-mentioned embodiments can be made, various changes can be made in an arbitrary component in accordance with any one of the above-mentioned embodiments, and an arbitrary component in accordance with any one of the above-mentioned embodiments can be omitted within the scope of the invention.

INDUSTRIAL APPLICABILITY

The target type identification device in accordance with the present invention is suitable for use as a target type identification device that, when determining the type of a target, needs to classify the target correctly even if there is a very small variation in observation specifications or the like without being affected by both a restriction imposed on the resolution and the accuracy of selection of a feature quantity.

EXPLANATIONS OF REFERENCE NUMERALS

1 reference image data storage unit (reference image data storage), 2 observation image data storage unit (observation image data storage), 3 image adjusting unit (image adjuster), 4 dictionary image data generating unit (dictionary image data generator), 5 dictionary image data storage unit, 6 polygon pattern generating unit (polygon pattern generator), 7 dictionary polygon pattern storage unit, 8 target polygon pattern storage unit, 9 polygon pattern selecting unit (polygon pattern selector), 10 pattern comparing unit (pattern comparing device), 11 pattern comparison result storage unit, 12 pattern integrating/extending unit (pattern integrator, pattern comparing device), 13 total matching degree calculating unit (type determining device), 14 total matching degree data storage unit, 15 type determining unit (type determining device), 16 type determination result storage unit, and 17 pattern extending unit (pattern comparing device).

**Claims**

1. A target type identification device comprising:

   a dictionary image data generator to group reference image data showing reference images which are images of targets of known types according to both observation specifications and the known types, and generate, from reference image data of each group, dictionary image data showing a dictionary image of each group which is used for a comparison with an observation image which is an image in which a target for type determination is observed;
   a polygon pattern generator to extract a plurality of luminance points from the dictionary image shown by the dictionary image data of each group which is generated by said dictionary image data generator, to generate a dictionary polygon pattern which is a shape pattern of a polygon of each group whose vertices are said plurality of luminance points, and also extract a plurality of luminance points from said observation image to generate a target polygon pattern which is a shape pattern of a polygon whose vertices are said plurality of luminance points;
   a pattern comparing device to perform a comparison of the dictionary polygon pattern of each group and the target polygon pattern which are generated by said polygon pattern generator; and
   a type determining device to determine a type of said target for type determination by using a result of the comparison of the polygon patterns which is performed by said pattern comparing device.

2. The target type identification device according to claim 1, wherein said target type identification device comprises a reference image data storage to store both the reference image data showing said reference images and observation specifications of said reference image data, and an observation image data storage to store observation image data showing said observation image, and wherein said dictionary image data generator groups plural pieces of reference image data stored in said reference image data storage according to both the observation specifications stored in said reference image data storage and the known types, and generates, from the reference image data of each group, the dictionary image data showing the dictionary image of each group which is used for a comparison with the observation image shown by the observation image data stored in said observation image data storage.

3. The target type identification device according to claim 2, wherein said target type identification device comprises an image adjuster to perform a luminance adjusting process, a size normalizing process, and an image alignment process on the reference image data stored in said reference image data storage to output the reference image data after the processes to said dictionary image data generator, and also perform a luminance adjusting process, a size normalizing process, and an image alignment process on the observation image data stored in said observation image data storage to output the observation image data after the processes to said polygon pattern generator.

4. The target type identification device according to claim 2, wherein said polygon pattern generator extracts, as luminance points, pixels each of whose luminance value is equal to or greater than a luminance threshold value from the dictionary image shown by the dictionary image data of each group which is generated by said dictionary image data generator, and also determines a plurality of combinations of luminance points which are to be used as vertices of a polygon from among the extracted plurality of luminance points to generate, for each of said combinations of luminance points, a dictionary polygon pattern whose vertices are the luminance points included in said combination, and extracts, as luminance points, pixels each of whose luminance value is equal to or greater than said luminance threshold value from the observation image shown by the observation image data stored in said observation image data storage, and also determines a plurality of combinations of luminance points which are to be used as vertices of a polygon from among the extracted plurality of luminance points to generate, for each of said combinations of luminance points, a target polygon pattern whose vertices are the luminance points included in said combination.

5. The target type identification device according to claim 4, wherein a lower limit, which is set in advance, on luminance values of high-luminance points is set, as said luminance threshold value, to said polygon pattern generator.

6. The target type identification device according to claim 4, wherein a value smaller than a lower limit, which is set in advance, on luminance values of high-luminance points is set, as said luminance threshold value, to said polygon pattern generator.

7. The target type identification device according to claim 4, wherein when a plurality of thresholds are set as said luminance threshold value, said polygon pattern generator uses each of the luminance threshold values to extract pixels each of whose luminance value is equal to or greater than the luminance threshold value, and also groups the extracted plurality of luminance points according to luminance ranks respectively corresponding to the plurality of luminance threshold values and determines combinations of luminance points which are to be used as vertices of a polygon from among a plurality of luminance points belonging to each group.

8. The target type identification device according to claim 4, wherein said polygon pattern generator predicts a range of variations in a luminance distribution from the observation specifications stored in said reference image data storage, and adds said range of variations to a distribution area of said generated dictionary polygon pattern.

9. The target type identification device according to claim 1, wherein said dictionary image data generator generates the dictionary image data showing said dictionary image while excluding luminance points each of whose frequency of appearance is lower than a reference frequency set in advance from among luminance points in said reference image.

10. The target type identification device according to claim 4, wherein said target type identification device comprises a polygon pattern selector to select a dictionary polygon pattern which is a target for comparison from among a plurality of dictionary polygon patterns belonging to each group which are generated by said polygon pattern generator, to output said dictionary polygon pattern to said pattern comparing device, and also select a target polygon pattern which is a target for comparison from among a plurality of target polygon patterns generated by said polygon pattern generator, to output said target polygon pattern to said pattern comparing device.

11. The target type identification device according to claim 10, wherein when a number of selectable patterns is set in advance, said polygon pattern selector selects dictionary polygon patterns each of which is a target for comparison and whose number does not exceed said number of patterns and target polygon patterns each of which is a target for comparison and whose number does not exceed said number of patterns from among the plurality of dictionary polygon patterns and the plurality of target polygon patterns which are generated by said polygon pattern generator.

12. The target type identification device according to claim 10, wherein when a range of selectable luminance values is set in advance, said polygon pattern selector selects, as a dictionary polygon pattern and a target polygon pattern which are targets for comparison, a dictionary polygon pattern consisting of luminance points each of whose luminance value falls within said range of luminance values and a target polygon pattern which is a target for comparison from among the plurality of dictionary polygon patterns and the plurality of target polygon patterns which are generated by said polygon pattern generator.

13. The target type identification device according to claim 10, wherein said polygon pattern selector selects a dictionary polygon pattern and a target polygon pattern which are targets for comparison from among the plurality of dictionary polygon patterns and the plurality of target polygon patterns which are generated by said polygon pattern generator, in ascending or descending order of lengths of sides which construct the patterns or areas of the patterns.

14. The target type identification device according to claim 10, wherein on a basis of luminance values of luminance points which construct said dictionary polygon pattern and those of said target polygon pattern, said polygon pattern selector selects a dictionary polygon pattern and a target polygon pattern which are targets for comparison from among the plurality of dictionary polygon patterns and the target polygon patterns which are generated by said polygon pattern generator.

15. The target type identification device according to claim 4, wherein said pattern comparing device includes a pattern comparator to compare a plurality of dictionary polygon patterns belonging to each group which are generated by said polygon pattern generator, and a plurality of target polygon patterns generated by said polygon pattern generator, and a pattern integrator to refer to comparison results acquired by said pattern comparator to specify a plurality of pairs each having a dictionary polygon pattern and a target polygon pattern which are in correspondence with each other from combinations each having one of said plurality of dictionary polygon patterns and one of said plurality of target polygon patterns, and integrate dictionary polygon patterns in the specified plurality of pairs and also integrate target polygon patterns in the specified plurality of pairs, and wherein said pattern comparator performs a comparison of a dictionary polygon pattern after integration and a target polygon pattern after integration which are acquired by said pattern integrator.

16. The target type identification device according to claim 15, wherein when it is determined in the process of comparing a dictionary polygon pattern and a target polygon pattern which are generated by said polygon pattern generator that a partial shape corresponding to a partial shape which constructs said target polygon pattern does not exist in partial shapes which construct said dictionary polygon pattern, said pattern comparator determines that there is no correspondence between said dictionary polygon pattern and said target polygon pattern, and ends the process of comparing said dictionary polygon pattern and said target polygon pattern.

17. The target type identification device according to claim 15, wherein when performing a comparison of a dictionary polygon pattern and a target polygon pattern which are generated by said polygon pattern generator, said pattern comparator performs an evaluation of a positional relationship between luminance points which construct said dictionary polygon pattern and luminance points which construct said target polygon pattern, and outputs a result of the comparison of said dictionary polygon pattern and said target polygon pattern on which the evaluation of said positional relationship is performed.

18. The target type identification device according to claim 17, wherein said pattern comparator calculates a degree of matching between luminance values of the luminance points which construct said dictionary polygon pattern, and luminance values of the luminance points which construct said target polygon pattern, and adds a weight corresponding to said degree of matching to a value of said evaluation.

19. The target type identification device according to claim 17, wherein said pattern comparator adds a weight corresponding to luminance values of the luminance points which construct said dictionary polygon pattern to a value of said evaluation.

20. The target type identification device according to claim 15, wherein after performing a process of specifying a pair of a dictionary polygon pattern and a target polygon pattern which are in correspondence with each other, when a luminance point which is not included in constituting points of the target polygon pattern in said pair exists in the luminance points which are extracted from the observation image by said polygon pattern generator, said pattern integrator performs a pattern extending process of searching for a luminance point in said dictionary image which corresponds to the existing luminance point, and, when a luminance point corresponding to said existing luminance point exists in said dictionary image, includes the luminance point in said dictionary image in constituting points of said dictionary polygon pattern and also includes said existing luminance point in the constituting points of said target polygon pattern.

21. The target type identification device according to claim 15, wherein said type determining device includes a goodness of fit calculator to calculate total goodness of fit of each group by using a result of the comparison of the dictionary polygon pattern after integration and the target polygon pattern after integration, which is performed by said pattern comparator, and a type determinator to specify a group corresponding to the type of the target which is said target for type determination on a basis of the total goodness of fit of each group which is calculated by said goodness of fit calculator, and determine that a type of the group specified thereby is the type of said target.

22. The target type identification device according to claim 21, wherein when a difference between a number of luminance points which construct the dictionary polygon pattern after integration and a number of luminance points which construct the target polygon pattern after integration is greater than a threshold set in advance, said goodness of fit calculator imposes a penalty corresponding to said difference to said total goodness of fit.

23. The target type identification device according to claim 15, wherein when performing a comparison of a dictionary polygon pattern and a target polygon pattern which are generated by said polygon pattern generator, said pattern comparator performs an evaluation of distances between luminance points which construct said dictionary polygon pattern and distances between luminance points which construct said target polygon pattern, and outputs a result of the comparison of said dictionary polygon pattern and said target polygon pattern on which the evaluation of said distances is performed.

24. The target type identification device according to claim 15, wherein when performing a comparison of a dictionary polygon pattern and a target polygon pattern which are generated by said polygon pattern generator, said pattern comparator performs an evaluation of a shape of a polygon consisting of luminance points which construct said dictionary polygon pattern and a shape of a polygon consisting of luminance points which construct said target polygon pattern, and outputs a result of the comparison of said dictionary polygon pattern and said target polygon pattern on which the evaluation of said shapes is performed.

25. The target type identification device according to claim 17, wherein when evaluating the positional relationship between the luminance points which construct said dictionary polygon pattern and the luminance points which construct said target polygon pattern, said pattern comparator evaluates the positional relationship between those luminance points in relative position coordinate systems.

26. The target type identification device according to claim 15, wherein when performing a comparison of a dictionary polygon pattern and a target polygon pattern which are generated by said polygon pattern generator, said pattern comparator performs an evaluation of a positional relationship by using a distance between a polygon consisting of luminance points which construct said dictionary polygon pattern, and a polygon consisting of luminance points which construct said target polygon pattern, and outputs a result of the comparison of said dictionary polygon pattern and said target polygon pattern on which the evaluation of said positional relationship is performed.

27. The target type identification device according to claim 4, wherein said pattern comparing device includes a pattern comparator to compare a plurality of dictionary polygon patterns belonging to each group which are generated by said polygon pattern generator, and a plurality of target polygon patterns generated by said polygon pattern generator, and a pattern extender to refer to comparison results acquired by said pattern comparator to specify a pair of a dictionary polygon pattern and a target polygon pattern which are in correspondence with each other from among combinations each having one of said plurality of dictionary polygon patterns and one of said plurality of target polygon patterns, and, when a luminance point which is not included in constituting points of the target polygon pattern in said pair exists in the luminance points which are extracted from the observation image by said polygon pattern generator, perform a pattern extending process of searching for a luminance point in said dictionary image which corresponds to the existing luminance point, and, when a luminance point corresponding to said existing luminance point exists in said dictionary image, including the luminance point existing in said dictionary image in constituting points of said dictionary polygon pattern and also including said existing luminance point in the constituting points of said target polygon pattern, and wherein said pattern comparator compares a dictionary polygon pattern after the extending process by said pattern extending unit and a target polygon pattern after the extending process.

28. The target type identification device according to claim 1, wherein said polygon pattern generator performs a unifying process of unifying a group of luminance points which are included in the plurality of luminance points extracted from the dictionary image shown by the dictionary image data of each group which is generated by said dictionary image data generator, and each of whose distance to any other luminance point is equal to or shorter than a distance threshold set in advance, into one luminance point, and generates a dictionary polygon pattern which is a shape pattern of a polygon of each group whose vertices are luminance points after said unifying process, and also performs a unifying process of unifying a group of luminance points which are included in the plurality of luminance points extracted from said observation image, and each of whose distance to any other luminance point is equal to or shorter than a distance threshold set in advance, into one luminance point, and generates a target polygon pattern which is a shape pattern of a polygon whose vertices are luminance points after said unifying process.

29. The target type identification device according to claim 28, wherein when performing a comparison of a dictionary polygon pattern and a target polygon pattern which are generated by said polygon pattern generator, said pattern comparing device performs an evaluation of a sum of luminance values of a plurality of luminance points which construct the group of luminance points which are unified in the unifying process by said polygon pattern generator, and outputs a result of the comparison of said dictionary polygon pattern and said target polygon pattern on which the evaluation of said sum is performed.

30. The target type identification device according to claim 28, wherein when performing a comparison of a dictionary polygon pattern and a target polygon pattern which are generated by said polygon pattern generator, said pattern comparing device performs an evaluation of a number of luminance values of a plurality of luminance points which construct the group of luminance points which are unified in the unifying process by said polygon pattern generator, and outputs a result of the comparison of said dictionary polygon pattern and said target polygon pattern on which the evaluation of said number is performed.

**31.** The target type identification device according to claim 28, wherein when performing a comparison of a dictionary polygon pattern and a target polygon pattern which are generated by said polygon pattern generator, said pattern comparing device performs an evaluation of an area of a distribution area of a plurality of luminance points which construct the group of luminance points which are unified in the unifying process by said polygon pattern generator, and outputs a result of the comparison of said dictionary polygon pattern and said target polygon pattern on which the evaluation of said area is performed.

# FIG.1

# FIG.2

# FIG.3

(a)
Dictionary Image 1

(b)
Dictionary Image 2

○:Low-Luminance Point

●:High-Luminance Point

# FIG.4

# FIG.5

# FIG.6

(a)

《Only Distance Index》

(b)

《Index According to Angle and Distance》

# FIG.7

《Flow of Polygonization (in the Case of Integrating Process)》

# FIG.8

Absolute Coordinate System

Relative Coordinate System

# FIG.9

(a)

《Position Evaluation Based on Distance Index》

(b)

《Position Evaluation Based on Angle Index》

# FIG.10

EP 3 023 808 A1

# FIG.11

《Flow of Polygonization (in the Case of Extending Process)》

# FIG.12

# FIG.13

# FIG.14

## INTERNATIONAL SEARCH REPORT

| International application No. |
| --- |
| PCT/JP2014/068932 |

**A. CLASSIFICATION OF SUBJECT MATTER**

*G01S7/41*(2006.01)i, *G06T7/00*(2006.01)i

According to International Patent Classification (IPC) or to both national classification and IPC

**B. FIELDS SEARCHED**

Minimum documentation searched (classification system followed by classification symbols)
G01S7/00-7/42; 13/00-13/95, G06T1/00-1/40; 3/00-9/40, G01B11/00-11/30

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2006-234678 A (Mitsubishi Electric Corp.), 07 September 2006 (07.09.2006), entire text; fig. 1 to 13 (Family: none) | 1-31 |
| A | JP 2005-3602 A (Mitsubishi Electric Corp.), 06 January 2005 (06.01.2005), entire text; fig. 1 to 18 (Family: none) | 1-31 |
| A | JP 2010-113731 A (Omron Corp.), 20 May 2010 (20.05.2010), entire text; fig. 1 to 13 & EP 2133838 A1 & WO 2008/111452 A1 | 1-31 |

☒ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 03 September, 2014 (03.09.14) | 16 September, 2014 (16.09.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2014/068932 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2008-521109 A (International Business Machines Corp.), 19 June 2008 (19.06.2008), entire text; fig. 1 to 29 & US 2006/0104484 A1 & WO 2006/053867 A1 | 1-31 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LESLIE M, NOVAK.** Performance of a High-Resolution Polarimetric SAR Automatic Target Recognition System. *The Lincoln Journal,* 1993, vol. 6 (1